(19) Europäisches Patentamt
European Patent Office
Office européen des brevets

(11) **EP 4 407 524 A1**

(12) **EUROPEAN PATENT APPLICATION**

(43) Date of publication:
**31.07.2024 Bulletin 2024/31**

(21) Application number: **23208074.7**

(22) Date of filing: **06.11.2023**

(51) International Patent Classification (IPC):
***G06N 3/098*** (2023.01)

(52) Cooperative Patent Classification (CPC):
**G06N 3/098;** G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2023 JP 2023010183**

(71) Applicant: **Hitachi, Ltd.**
**Tokyo 100-8280 (JP)**

(72) Inventors:
• **TARUMI, Shinji**
  **Tokyo, 100-8280 (JP)**
• **ISODA, Yuya**
  **Tokyo, 100-8280 (JP)**
• **YOSHIDA, Hanae**
  **Tokyo, 100-8280 (JP)**

(74) Representative: **Strehl Schübel-Hopf & Partner**
**Maximilianstrasse 54**
**80538 München (DE)**

(54) **FEDERATED LEARNING SYSTEM, FEDERATED LEARNING METHOD, AND FEDERATED LEARNING PROGRAM**

(57)    To implement model integration by federated learning considering inference target data, in a federated learning system, a server obtains an input data set, inputs the input data set into a similarity calculation model, calculates a first similarity between the input data set and a plurality of learning data sets, each of a plurality of client terminals inputs a data sample to the similarity calculation model to calculate a second similarity between the data sample and the plurality of learning data sets, executes a similarity calculation between the first similarity and the second similarity and outputs a learning weight, learns a first analysis model that calculates a predicted value of the first objective variable from the first explanatory variable for the input data set based on the first analysis model, the first explanatory variable and the first objective variable of the learning data set, and the learning weight, and transmits a first learning result, and the server generates a second analysis model that integrates the first learning result and calculates a predicted value of the first objective variable from the first explanatory variable for the input data set.

*FIG. 1*

**Description**

**CLAIM OF PRIORITY**

The present application claims priority from Japanese patent application No. 2023-10183 filed on January 26, 2023, the content of which is hereby incorporated by reference into this application.

**BACKGROUND OF THE INVENTION**

**1. Field of the Invention**

The present invention relates to a federated learning system, a federated learning method, and a federated learning program for executing federated learning.

**2. Description of Related Art**

With the advancement of digitization of healthcare information, secondary utilization of healthcare information managed by a local government, a medical institution, individuals, and the like (hereafter referred to as a client) is progressing. In particular, federated learning, which enables models to be learned in a distributed environment without integrating and managing information on a server, is attracting attention from the viewpoint of personal information protection.

WO2021/079792 discloses a machine learning system and method in federated learning, an integration server, an information processing device, a program, and an inference model creation method. In WO2021/079792, each of a plurality of client terminals classifies data stored in a medical institution based on data acquisition conditions, and classifies learning data for respective data groups acquired under the same or similar acquisition conditions. Each client terminal executes machine learning of a learning model for each learning data group classified by condition category, and transmits each learning result and condition information to an integration server. The integration server integrates the received learning results for each condition category, creates a plurality of master model candidates, and evaluates an inference accuracy of each master model candidate.

WO2021/079792 describes a method of performing learning for each learning data group in which qualities of photographed images used for learning are approximately homogenized. Therefore, an integrated model corresponding to inference target data is not generated, and differences in distribution of learning data groups are not considered.

**SUMMARY OF THE INVENTION**

An object of the invention is to implement model integration by federated learning considering inference target data.

A federated learning system according to an aspect of the invention disclosed in the present application includes a plurality of client terminals that respectively have learning data sets and a server capable of communicating with the plurality of client terminals, and performs federated learning, in which each of the plurality of client terminals learns a model using each of the learning data sets and the server repeats a process of integrating the model of each of the plurality of client terminals using the learning result, in which the learning data set includes one or more data samples including a client ID specifying the client terminal, a first explanatory variable, and a first objective variable, the federated learning system executes a first calculation process by the server and a second calculation process by each of the plurality of client terminals, and executes a first federated learning process that repeats a first learning process by each of the plurality of client terminals and a first integration process by the server until a first end condition is satisfied, in the first calculation process, the server obtains an input data set including one or more pieces of input data that includes the client ID specifying the client terminal, the first explanatory variable, and the first objective variable, in the first calculation process, the server calculates a first similarity between the input data set and the plurality of learning data sets by inputting the input data set into a similarity calculation model for calculating a similarity between the data sample and the plurality of learning data sets, in the second calculation process, each of the plurality of client terminals calculates a second similarity between the data sample and the plurality of learning data sets by inputting the data sample into the similarity calculation model, in the second calculation process, each of the plurality of client terminals outputs a learning weight by performing a similarity calculation between the first similarity and the second similarity, in the first learning process, each of the plurality of client terminals learns a first analysis model that calculates a predicted value of the first objective variable from the first explanatory variable for the input data set based on the first analysis model, the first explanatory variable and the first objective variable of the learning data set, and the learning weight, and transmits a first learning result to the server, and in the first integration process, the server generates a second analysis model that calculates a predicted value of the first objective variable from the first explanatory variable for the input data set by integrating the first learning result by the first learning process from the plurality of client terminals.

According to a representative embodiment of the invention, model integration can be implemented by federated learning considering inference target data. Problems, configurations, and effects other than those described above will be clarified by the following description of the examples.

## BRIEF DESCRIPTION OF THE DRAWINGS

FIG. 1 is an explanatory diagram illustrating an example of federated learning according to Example 1;
FIG. 2 is an explanatory diagram illustrating an example of a learning data set;
FIG. 3 is an explanatory diagram illustrating an example of federated learning of a similarity calculation model;
FIG. 4 is an explanatory diagram illustrating an example of federated learning of an analysis model for input variables;
FIG. 5 is an explanatory diagram illustrating a specific example of a learning weight calculation illustrated in FIG. 4;
FIG. 6 is an explanatory diagram illustrating a specific example of model learning by weighting illustrated in FIG. 4;
FIG. 7 is a sequence diagram of federated learning in a federated learning system according to Example 1;
FIG. 8 is an explanatory diagram illustrating an example of federated learning according to Example 2;
FIG. 9 is an explanatory diagram illustrating an example of federated learning of an individual analysis model;
FIG. 10 is an explanatory diagram illustrating a specific example of a learning weight calculation illustrated in FIG. 9;
FIG. 11 is an explanatory diagram illustrating a specific example of model learning by weighting 911t illustrated in FIG. 9;
FIG. 12 is an explanatory diagram illustrating a specific example of model learning by weighting 912t illustrated in FIG. 9;
FIG. 13 is an explanatory diagram illustrating a specific example of model learning by weighting 913t illustrated in FIG. 9;
FIG. 14 is an explanatory diagram illustrating an example of analysis model for input variables integration;
FIG. 15 is a sequence diagram of federated learning in a federated learning system according to Example 2;
FIG. 16 is an explanatory diagram illustrating an example of a management screen according to Examples 1 to 3; and
FIG. 17 is a block diagram illustrating a hardware configuration example of a server and a client terminal according to Examples 1 to 3.

## DESCRIPTION OF EMBODIMENTS

[Example 1]

<Federated Learning Example>

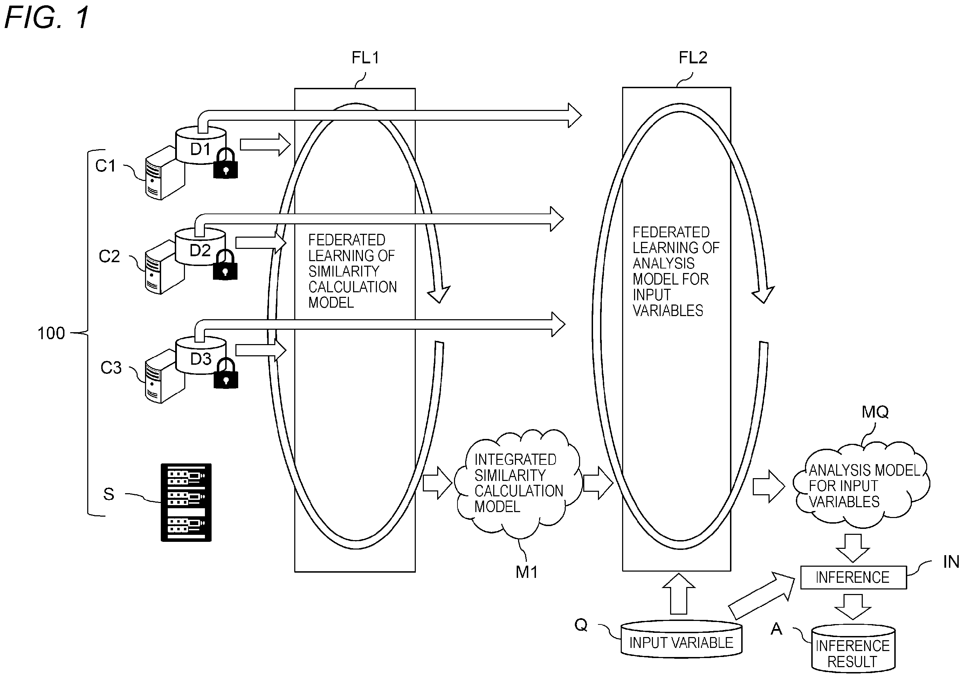

FIG. 1 is an explanatory diagram of an example of federated learning according to Example 1. A federated learning system 100 includes a server S and a plurality of (three in FIG. 1 as an example) client terminals C1 to C3. When the client terminals are not distinguished, the client terminals are denoted as a client terminal Ck (k = 1, 2, 3, ..., K). The number of the client terminals Ck is not limited to three, and only needs to be two or more. In the example, K = 3. The server S and the client terminal Ck are communicably connected via a network such as the Internet, a local area network (LAN), or a wide area network (WAN).

The client terminals C1 to C3 have learning data sets D1 to D3. When the learning data sets are not distinguished, the learning data sets are denoted as a learning data set Dk. The learning data set Dk is a combination of learning data as an explanatory variable and correct answer data as an objective variable. It is assumed that the learning data set Dk is prohibited from being taken out from the client terminal Ck or the site where the client terminal Ck is installed.

The client terminal Ck is a computer that gives the learning data set Dk to a prediction model to learn individually, and transmits a learning result such as a model parameter of the learned prediction model or gradient thereof to the server S every time the client terminal Ck learns.

The server S is a computer that integrates prediction models for respective client terminals Ck using learning results from the client terminals Ck to generate an integrated prediction model, and transmits the integrated prediction model to the client terminals Ck. The client terminal Ck gives the learning data set Dk to the integrated prediction model from the server S to learn the prediction model. By repeating such learning, the federated learning system 100 executes federated learning.

In Example 1, the federated learning system 100 executes two types of federated learning. One is federated learning FL1 of a similarity calculation model, and the other is federated learning FL2 of an analysis model for input variables.

The federated learning FL1 of the similarity calculation model is federated learning that executes the federated learning described above using the similarity calculation model as the prediction model, thereby generating an integrated similarity calculation model M1 which is obtained by integrating the similarity calculation model from each client terminal Ck. The similarity calculation model is a prediction model that, when focusing on the learning data set Dk (hereinafter denoted as learning data set Dj to distinguish from Dk) of the client terminal Ck (hereinafter denoted as client terminal Cj to distinguish from Ck) to be learned among the client terminals C1 to CK, calculates a similarity with the learning data set Dk for each i-th (i is an integer that satisfies $1 \leq i \leq N_j$, and $N_j$ is the total number of data samples in the learning data set Dj) data sample (hereinafter denoted as data sample i) of the learning data set Dj.

Specifically, for example, the similarity calculation model is a model that calculates a tendency score using a client ID that uniquely specifies the client terminal Ck as an assigned variable.

Hereinafter, k is used for any client terminal and a learning data set thereof, but j is used for a client terminal to be learned and a learning data set thereof.

By generating the integrated similarity calculation model M1 before the federated learning FL2 of the analysis model for input variables, the influence of each data sample i on federated learning can be adjusted in the federated learning FL2 of the analysis model for input variables.

The federated learning FL2 of the analysis model for input variables is federated learning in which an analysis model for input variables MQ is generated using the integrated similarity calculation model M1 generated in the federated learning FL1, an input variable Q, and the learning data set Dk. The input variable Q is a matrix configured of r (r is an integer that satisfies $1 \leq r \leq R$, and R is an integer of 1 or more) rows of input data to be inferred. The details of the federated learning FL2 of the analysis model for input variables will be described later. When the input variable Q is input to the analysis model for input variables MQ, inference IN is executed and an inference result A is obtained.

< Learning Data Set Dk>

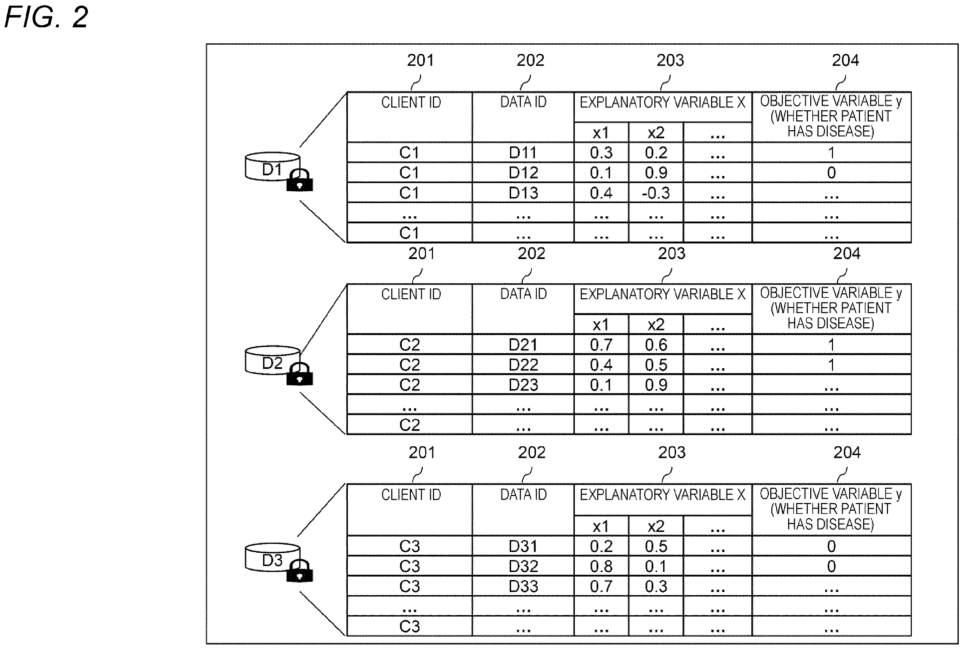

FIG. 2 is an explanatory diagram illustrating an example of the learning data set Dk. The learning data set Dk includes a client ID (In FIG. 2 and subsequent figures, the client ID may be denoted as "CID") 201, a data ID 202, an explanatory variable 203 (may be denoted as explanatory variable X), and an objective variable 204 (may be denoted as objective variable y) as fields. A combination of field values in the same row is an entry that defines one data sample. Each of the learning data sets D1 to D3 is, for example, a set of data samples of patient groups for each hospital.

The client ID 201 is identification information that uniquely specifies the client terminal Ck. A value of client ID 201 is represented by Ck. The data ID 202 is identification information that uniquely specifies the data sample. A value of data ID 202 is represented by Dki. i is a number unique to the data sample. The data ID 202 specifies, for example, a patient. The explanatory variable 203 is learning data used in the federated learning FL2 of the analysis model for input variables, and includes one or more feature quantities x1, x2, ... (the feature quantities are simply denoted as feature quantity x when not being distinguished). The feature quantity x is, for example, a height, weight, blood pressure, and the like of the patient specified by the data ID 202.

The objective variable 204 is correct answer data used in the federated learning FL2 of the analysis model for input variables. The objective variable 204 indicates, for example, whether the patient specified by the data ID 202 has a disease. y = 1 indicates having disease and y = 0 indicates having no disease.

The input variable Q illustrated in FIG. 1 is a combination of values of x1, x2, ... in the explanatory variable 203 and the value of y in the objective variable 204 that are inference targets for the inference IN. The input variable Qr may be the values of the explanatory variable 203 and the objective variable 204 in any data ID 202 in the learning data set Dk, or the values of the explanatory variable 203 and the objective variable 204 that are not in the learning data set Dk.

<Federated Learning FL1 of Similarity Calculation Model>

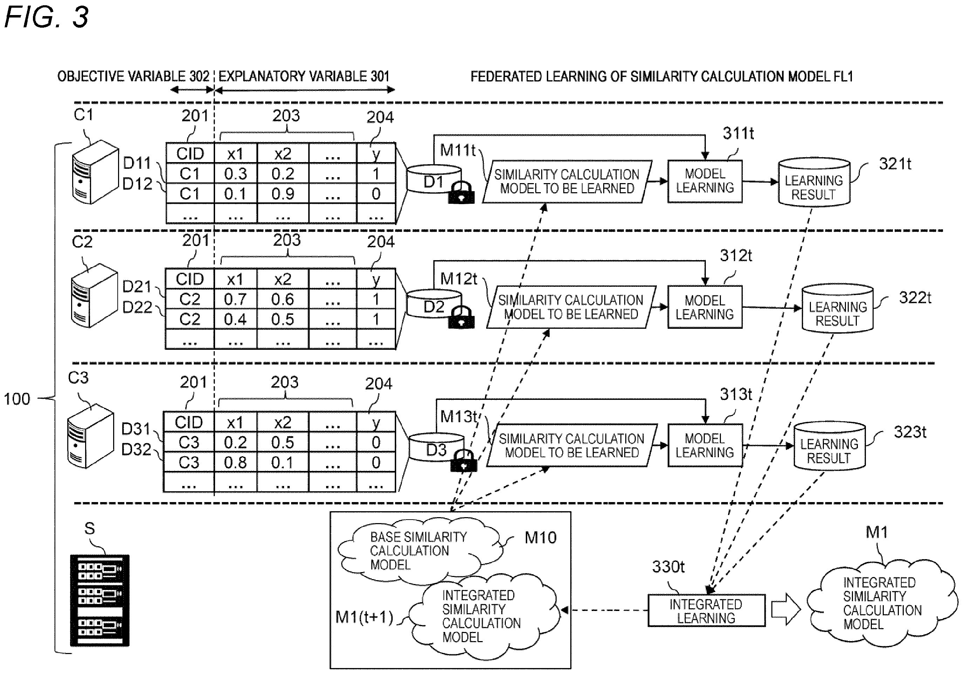

FIG. 3 is an explanatory diagram illustrating an example of the federated learning FL1 of the similarity calculation model. In the federated learning FL1 of the similarity calculation model, an explanatory variable 301 is a combination of the explanatory variable 203 and the objective variable 204 of the learning data set Dk, and the client ID 201 is an objective variable 302.

The server S has a similarity calculation model M10 as a base (hereinafter referred to as a base similarity calculation model). The base similarity calculation model M10 may be an untrained neural network or a trained neural network in which a model parameter $\varphi_k{}^t$ such as a weight or bias is set. t is an ascending natural number starting from 1 indicating the number of execution times of the federated learning FL1 of the similarity calculation model. The server S transmits the base similarity calculation model M10 to the client terminals C1 to C3.

If the client terminal Ck has an untrained neural network, the server S may transmit the model parameter $\varphi_k{}^t$ to the client terminal Ck, and the client terminal Ck may construct the base similarity calculation model M10 by setting

the model parameter $\varphi_k{}^t$ received from the server S to the untrained neural network.

The base similarity calculation model M10 becomes a similarity calculation model to be learned M11t of the first federated learning FL1 in the client terminal Ck.

The client terminal Ck executes model learning 31 kt (311t to 313t) in the t-th federated learning FL1. Specifically, for example, the client terminal Ck gives the explanatory variable 301 and the objective variable 302 of the learning data set D1 to the similarity calculation model to be learned M1kt (M11t to M13t) to learn the similarity calculation model to be learned M1kt (M11t to M13t) individually. The client terminal Ck transmits, to the server S, the learning result 32kt (321t to 323t), which is the model parameter $\varphi_k{}^t$ or gradient $gs_k{}^t$ thereof when updating the similarity calculation model to be learned M1kt.

The server S executes integrated learning 330t in the t-th federated learning FL1 using the learning result 32kt, and generates a next integrated similarity calculation model M1(t+1). Specifically, for example, the server S generates the integrated similarity calculation model M1(t+1) using the integrated result obtained by integrating the learning results 32kt, and transmits the integrated similarity calculation model M1(t+1) or an integrated model parameter $\varphi^{t+1}$ thereof to the client terminal Ck. Accordingly, the similarity calculation model to be learned M1kt in the next federated learning FL1 is set in the client terminal Ck.

As such, the federated learning FL1 is repeatedly executed. When the number of execution times t reaches a predetermined threshold value T1, or when an accuracy of the integrated similarity calculation model M1t reaches a target accuracy, the server S ends the federated learning FL1, outputs the latest integrated similarity calculation model M1(t+1) as the integrated similarity calculation model M1, and transmits the integrated similarity calculation model M1 to the client terminals C1 to C3.

Formulas used in the federated learning FL1 of the similarity calculation model are defined below.

$$[p_j]^t = h(X, y; \varphi_j{}^t) \ \dots \ (1)$$

The above equation (1) is a calculation expression that defines the similarity calculation model, and is executed by model learning 31jt of the client terminal Cj. The function h is the similarity calculation model to be learned M1jt (M11t to M13t) defined by the explanatory variable 301, which is a combination of an explanatory variable 203 (X) and an objective variable 204 (y), and the model parameter $\varphi_j{}^t$. $[p_j]^t$ is a prediction probability indicating which learning data set Dk is similar to each data sample i of the learning data set Dj of the client terminal Cj in the t-th federated learning FL1.

Assuming that the total number of data samples i in the learning data set Dj is $N_j$, the prediction probability $[p_j]^t$ is an $N_j \times K$ matrix. That is, a row vector $[p_{ji}]^t$, which is a combination of K elements in the i-th row of the matrix, is a prediction probability indicating a similarity between the data sample i of the learning data set Dj and a learning data set D1, a prediction probability indicating a similarity between the data sample i of the learning data set Dj and a learning data set D2, a prediction probability indicating a similarity between the data sample i of the learning data set Dj and a learning data set D3, ..., and a similarity between the data sample i of the learning data set Dj and a learning data set DK.

A column vector $[p_j{}^k]^t$, which is a combination of $N_j$ elements in the k-th column of the matrix of the prediction probability $[p_j]^t$, is a prediction probability indicating a similarity between the first (i = 1) data sample i of the learning data set Dj and the learning data set Dk, a prediction probability indicating a similarity between the second (i = 2) data sample i of the learning data set Dj and the learning data set Dk, a prediction probability indicating a similarity between the third (i = 3) data sample i of the learning data set Dj and the learning data set Dk, ..., and a prediction probability indicating a similarity between the $N_j$-th (i = $N_j$) data sample i of the learning data set Dj and the learning data set Dk.

[Formula 1] Equation (2)

$$H\left(\varphi_j{}^t\right) \stackrel{\text{def}}{=} \frac{1}{N_j} \sum_i^{N_j} loss\left(p_{ji}, [p_{ji}]t; \varphi_j{}^t\right) \ \dots \ (2)$$

The above equation (2) is a loss function $H((\varphi_j{}^t)$ calculated by the model learning 31jt of the client terminal Cj in the t-th federated learning FL1. $p_{ji}$ is the similarity of the data sample i of the learning data set Dj with respect to the learning data sets D1 to D3. The similarity $p_{ji}$ has a range of, for example, 0.0 to 1.0, and the larger the value, the more similar it is.

When j = 1, $p_{ji}$ = (1.0, 0, 0), and indicates that the data sample i is a data sample within the learning data set D1. When j = 2, $p_{ji}$ = (0, 1.0, 0), and indicates that the data sample i is a data sample within the learning data set D2. When j = 3, $p_{ji}$ = (0, 0, 1.0), and indicates that the data sample i is a data sample within the learning data set D3.

$[p_{ji}]^t$ is a row vector that is a prediction probability indicating how much similar the data sample i is to the learning data sets D1 to D3 in the matrix indicated by the prediction probability $[p_j]^t$ in the t-th federated learning FL1.

$N_j$ is the total number of data samples i in the learning data set Dj. A function loss is an error function of the data sample i, and an average value of the error function loss of each data sample i is a loss function $H((\varphi_j^t)$.

[Formula 2] Equation (3)

$$gs_j{}^t = \nabla H\left(\varphi_j{}^t\right) \ ... \ (3)$$

The above equation (3) is a calculation expression that defines the gradient $gs_j^t$ of the model parameter $\varphi_j^t$, and is executed by the model learning 31jt of the client terminal Cj. $\eta$ is a learning rate. J is the total number of the client terminals Cj to be learned, and J = K. When applying the following equation (4), the client terminal Cj transmits the gradient $gs_j^t$ to the server S as a learning result 32jt.

[Formula 3] Equation (4)

$$\varphi^{t+1} \leftarrow \varphi^t - \eta \sum_{j=1}^{J} \frac{N_j}{N} gs_j{}^t \ ... \ (4)$$

The above equation (4) is a calculation expression for updating the integrated model parameter $\varphi_j^t$ to the integrated model parameter $\varphi_j^{t+1}$, and is executed by the integrated learning 330t of the server S. The server S receives the gradient $gs_j^t$ as the learning result 32jt from the client terminal Cj and executes the above equation (4). The integrated model parameter $\varphi^t$ of the first term on the right side of the above equation (4) is an integrated model parameter calculated as a result of executing the above equation (4) in the previous federated learning FL1.

[Formula 4] Equation (5), Equation (6)

$$\varphi_j^{t+1} \leftarrow \varphi_j{}^t - \eta * gs_j{}^t \ ... \ (5)$$

$$\varphi^{t+1} = \sum_{j=1}^{J} \frac{N_j}{N} \varphi_j{}^{t+1} \ ... \ (6)$$

The above equation (5) is a calculation expression for updating the model parameter $\varphi_j^t$ to the model parameter $\varphi_j^{t+1}$, and is executed by the model learning 31jt of the client terminal Cj. When applying the above equation (5), the client terminal Cj transmits the updated model parameter $\varphi_j^{t+1}$ to the server S as the learning result 32jt.

The above equation (6) is a calculation expression for calculating the integrated model parameter $\varphi^{t+1}$ using updated model parameter $\varphi_j^{t+1}$ of the above equation (5), and is executed by the integrated learning 330t of the server S. N is the total number of data samples i of the client terminals C1 to Cj.

The federated learning system 100 calculates the integrated model parameter $\varphi^{t+1}$ using either an updating method according to the above equation (4) or an updating method according to the equations (5) and (6). The server S updates the integrated similarity calculation model M1t (base similarity calculation model M10 when t = 0) with the integrated model parameter $\varphi^{t+1}$ to generate an integrated similarity calculation model M1(t+1).

The server S transmits the integrated similarity calculation model M1(t+1) or the integrated model parameter $\varphi^{t+1}$ thereof to the client terminals C1 to C3, thereby updating the above equation (1).

$$[p_j]^{t+1} = h(X, y; \varphi^{t+1}) \ ... \ (7)$$

The above equation (7) is a calculation expression that defines the integrated similarity calculation model M1(t+1), is generated by the integrated learning 330 of the server S, is transmitted to the client terminal Ck, and becomes a similarity calculation model to be learned M1kt in the next federated learning FL1.

$$[p_j] = h(X, y; \varphi) \ ... \ (8)$$

The above equation (8) is a calculation expression that defines the integrated similarity calculation model M1 when the federated learning FL1 is ended. Since the expression is the same as the above equation (7) at the end of the federated learning FL1, "t+1" is deleted from the above equation (7).

<Federated Learning FL2 of Analysis Model for Input Variables>

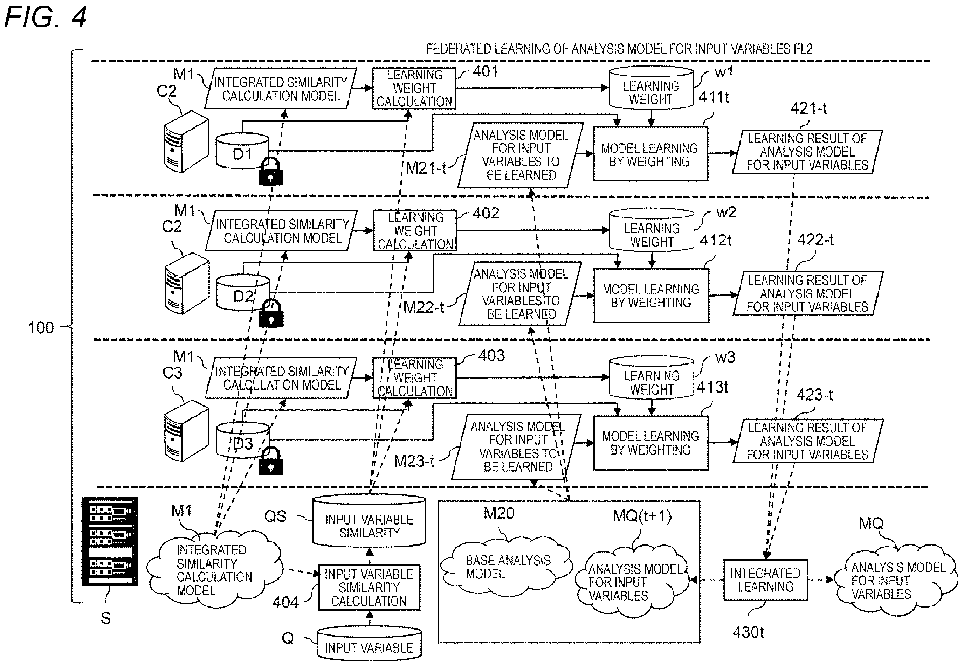

FIG. 4 is an explanatory diagram illustrating an example of the federated learning FL2 of the analysis model for input variables. The client terminals C1 to C3 execute learning weight calculations 401 to 403. Specifically, for example, the client terminal Cj inputs the explanatory variable 301 of the learning data set Dj into the integrated similarity calculation model M1 (the equation (8) described above) generated in FIG. 3 to calculate prediction probability $[p_j]$ indicating which learning data set Dk is similar to each data sample i of the learning data set Dj. The client terminal Cj calculates a learning weight $w_j$ using the calculated prediction probability $[p_j]$ and an input variable similarity QSr.

In an input variable similarity calculation 404, the server S calculates an input variable similarity QS by inputting the input variable Q into the integrated similarity calculation model M1. The input variable similarity QS is used in the learning weight calculations 401 to 403.

The server S has an analysis model for input variables (hereinafter referred to as a base analysis model) M20 as a base. The base analysis model M20 may be an untrained neural network, or may be a trained neural network in which a model parameter $\theta^t$ such as a weight and bias is set. The model parameter $\theta^t$ is a model parameter generated in the t-th federated learning FL2 when the input variable Q is given. t is an ascending natural number starting from 1 indicating the number of execution times of the federated learning FL2 of the analysis model for input variables. The server S transmits the base analysis model M20 to the client terminal Ck.

The base analysis model M20 becomes an analysis model for input variables to be learned M2j-1 of the t = 1st federated learning FL2 in the client terminal Cj. In the t = 2nd and subsequent federated learning FL2, an analysis model for input variables to be learned M2j-t (t ≥ 2) is transmitted to the client terminal Ck as the base analysis model.

If the client terminal Cj has an untrained neural network, the server S may transmit the model parameter $\theta^t$ to the client terminal Ck, and the client terminal Ck may construct the base individual analysis model M20 by setting the model parameter $\theta^t$ received from the server S to the untrained network.

When j = 1, the client terminal C1 holds an analysis model for input variables to be learned M21-t. When j = 2, the client terminal C2 holds an analysis model for input variables to be learned M22-t. When j = 3, the client terminal C3 holds an analysis model for input variables to be learned M23-t.

The client terminal Cj executes model learning by weighting 41jt. Specifically, for example, the client terminal Cj inputs the explanatory variable 203 of the learning data set Dj to the analysis model for input variables to be learned M2j-t to calculate a predicted value $[y_j]$ of the objective variable 204 for each analysis model for input variables to be learned M2j-t. The client terminal Cj calculates a loss function $F(\theta_j^t)$ for each analysis model for input variables to be learned M2j-t using the learning weight $w_j$, the objective variable y, the predicted value $[y_j]$, and the model parameter $\theta_j^t$.

Then, the client terminal Cj calculates the gradient $ga_j^t$ of the model parameter $\theta_j^t$ as a learning result of analysis model for input variables 42j-t, and updates the model parameter $\theta_j^t$ to a model parameter $\theta_j^{(t+1)}$. The model parameter $\theta_j^{(t+1)}$ is also included in the learning result of analysis model for input variables 42j-t.

When j = 1, the client terminal C1 generates a learning result of analysis model for input variables 421-t. The learning result of analysis model for input variables 421-t is a model parameter $\theta_1^t$ or gradient $ga_1^t$ thereof updated by an analysis model for input variables to be learned M21-t.

When j = 2, the client terminal C2 generates a learning result of analysis model for input variables 422-t. The learning result of analysis model for input variables 422-t is a model parameter $\theta_2^t$ or gradient $ga_2^t$ thereof updated by an analysis model for input variables to be learned M22-t.

When j = 3, the client terminal C3 generates a learning result of analysis model for input variables 423-t. The learning result of analysis model for input variables 423-t is a model parameter $\theta_3^t$ or gradient $ga_3^t$ thereof updated by an analysis model for input variables to be learned M23-t.

The server S receives the learning result of analysis model for input variables 42j-t from the client terminal Ck. Specifically, for example, the server S receives the learning result of analysis model for input variables 421-t from the client terminal C1, receives the learning result of analysis model for input variables 422-t from the client terminal C2, and receives the learning result of analysis model for input variables 423-t from the client terminal C3.

The server S executes integrated learning 430t in the t-th federated learning FL2 to generate the next analysis model for input variables MQ(t+1). Specifically, for example, the server S integrates the learning results of analysis model for input variables 421-t, 422-t, and 423-t to generate the analysis model for input variables MQ(t+1).

The server S transmits the analysis model for input variables MQ(t+1) or integrated model parameter $\theta^{(t+1)}$ thereof to the client terminal Ck. Accordingly, the analysis model for input variables to be learned M2j-t in the next federated learning FL2 is set in the client terminal Ck.

Specifically, for example, the server S transmits the analysis model for input variables MQ(t+1) or integrated model parameter $\theta^{(t+1)}$ thereof to the client terminals C1 to C3. Accordingly, using the received information, the client terminal C1 sets the analysis model for input variables to be learned M21-t in the next federated learning FL2, the client terminal C2 sets the analysis model for input variables to be learned M22-t in the next federated learning FL2, and the client terminal C3 sets the analysis model for input variables to be learned M23-t in the next federated learning FL2.

As such, the federated learning FL2 is repeatedly executed. When the number of execution times t reaches a predetermined threshold T2, or when the accuracy of the analysis model for input variables MQ all reaches a target accuracy, the server S ends the federated learning FL2 and outputs the latest analysis model for input variables MQ(t+1) as the analysis model for input variables MQ.

<Learning Weight Calculation 40k>

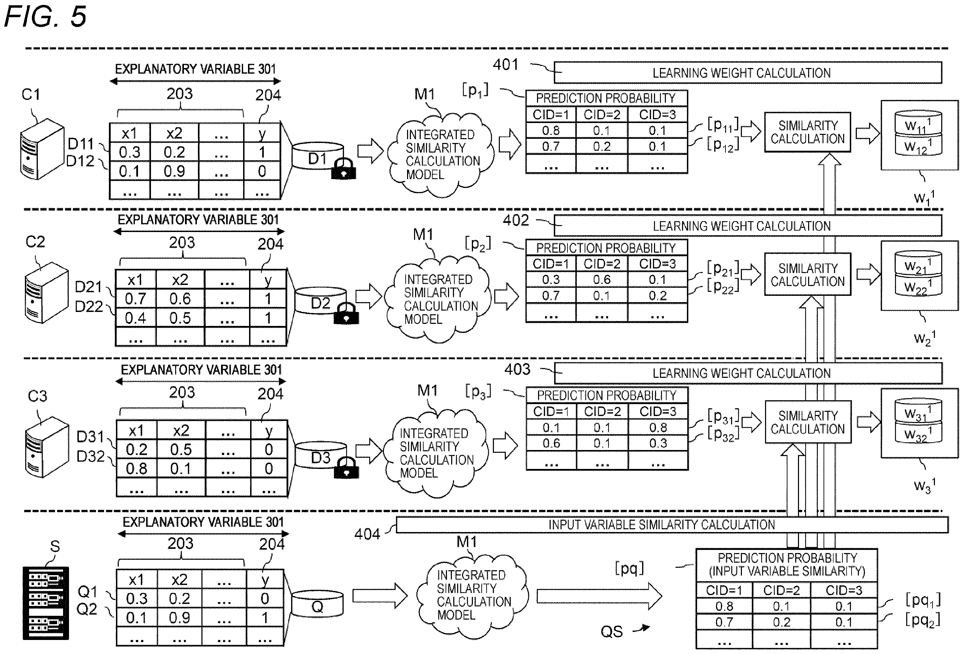

FIG. 5 is an explanatory diagram illustrating a specific example of the learning weight calculation illustrated in FIG. 4. In FIG. 5, the learning data set D1 includes data samples D11 and D12 as the data sample i, the learning data set D2 includes the data samples D21 and D22 as the data sample i, and the learning data set D3 includes the data samples D31 and D32 as data sample i. The server S has input data Q1 and Q2 having values of the explanatory variable 203 as the input variable Q.

In the input variable similarity calculation 404, the server S inputs the input variable Q into the integrated similarity calculation model M1 and calculates a prediction probability [pq] as an input variable similarity QS.

The client terminal Cj inputs the explanatory variable 301 of the learning data set Dj into the integrated similarity calculation model M1, and calculates the prediction probability $[p_j]$. The prediction probability $[p_j]$ is configured of a prediction probability $[p_{ji}]$ for each data sample i. The prediction probability $[p_{ji}]$ is a row vector indicating a prediction probability indicating how much similar a certain data sample i of the learning data set Dj is to each learning data set Dk.

Specifically, for example, when j = 1, the client terminal C1 inputs the explanatory variable 301 of the learning data set D1 into the integrated similarity calculation model M1, and calculates a prediction probability $[p_1]$. By inputting the explanatory variable 301 of the data sample D11 into the integrated similarity calculation model M1, a prediction probability $[p_{11}]$ corresponding to the data sample D11 is calculated, and by inputting the explanatory variable 301 of the data sample D12 into the integrated similarity calculation model M1, a prediction probability [piz] corresponding to the data sample D12 is calculated.

In the learning weight calculation 401, the client terminal C1 executes similarity calculation between the prediction probability $[p_1]$ and a prediction probability $[pq_r]$. Specifically, for example, the client terminal C1 calculates the similarity between the prediction probability $[p_{11}]$ corresponding to the data sample D11 and a prediction probability $[pq_1]$ corresponding to the input data Q1. The calculated similarity is set as a learning weight wii'. Similarly, the client terminal C1 calculates the similarity between the prediction probability $[p_{12}]$ corresponding to the data sample D12 and the prediction probability $[pq_1]$ corresponding to the input data Q1. The calculated similarity is set as a learning weight $w_{12}^1$. The learning weights $w_{11}^1$ and $w_{12}^1$ are collectively referred to as a learning weight $w_1^1$.

When j = 2, the client terminal C2 inputs the explanatory variable 301 of the learning data set D2 into the integrated similarity calculation model M1, and calculates a prediction probability $[p_2]$. By inputting the explanatory variable 301 of the data sample D21 into the integrated similarity calculation model M1, a prediction probability $[p_{21}]$ corresponding to the data sample D21 is calculated, and by inputting the explanatory variable 301 of the data sample D22 into the integrated similarity calculation model M1, a prediction probability [pzz] corresponding to the data sample D22 is calculated.

In the learning weight calculation 402, the client terminal C2 executes similarity calculation between the prediction probability [pz] and the prediction probability $[pq_r]$. Specifically, for example, the client terminal C2 calculates the similarity between the prediction probability $[p_{21}]$ corresponding to the data sample D21 and the prediction probability $[pq_1]$ corresponding to the input data Q1. The calculated similarity is set as a learning weight $w_{21}^1$. Similarly, the client terminal C2 calculates the similarity between the prediction probability [pzz] corresponding to the data sample D22 and the prediction probability $[pq_1]$ corresponding to the input data Q1. The calculated similarity is set as a learning weight $w_{22}^1$. The learning weights $w_{21}^1$ and $w_{22}^1$ are collectively referred to as a learning weight $w_2^1$.

When j = 3, the client terminal C3 inputs the explanatory variable 301 of the learning data set D3 into the integrated similarity calculation model M1, and calculates a prediction probability $[p_3]$. By inputting the explanatory variable 301 of the data sample D31 into the integrated similarity calculation model M1, a prediction probability $[p_{31}]$ corresponding to the data sample D31 is calculated, and by inputting the explanatory variable 301 of the data sample D32 into the integrated similarity calculation model M1, a prediction probability $[p_{32}]$ corresponding to the data sample D32 is calculated.

In the learning weight calculation 403, the client terminal C3 executes similarity calculation between the prediction probability $[p_3]$ and the prediction probability $[pq_r]$. Specifically, for example, the client terminal C3 calculates the similarity between the prediction probability $[p_{31}]$ corresponding to the data sample D31 and the prediction probability $[pq_1]$ corresponding to the input data Q1. The calculated similarity is set as a learning weight $w_{31}^1$. Similarly, the client terminal C3 calculates the similarity between the prediction probability $[p_{32}]$ corresponding to the data sample D32 and the prediction probability $[pq_1]$ corresponding to the input data Q1. The calculated similarity is set as a learning weight $w_{32}^1$. The learning weights $w_{31}^1$ and $w_{32}^1$ are collectively referred to as a learning weight $w_3^1$.

Equation (9) used for calculating the learning weight $w_{ji}^r$ in the federated learning FL2 of the analysis model for input variables is defined below.
[Formula 5] Equation (9)

$$w_{ji}{}^{r} = \frac{1}{\alpha \left\| [p_{ji}] - [pq_r] \right\|} \ \dots (9)$$

$w_{ji}{}^{r}$ on the left side is a learning weight applied to a similarity relationship between an i-th data sample Dji of the learning data set Dj and input data Qri of the input variable Qr. $[p_{ji}]$ on the right side is the prediction probability corresponding to the data sample Dji. $[pq_r]$ on the right side is the prediction probability corresponding to the input variable Qr. $\alpha$ on the right side is a parameter for adjusting the degree of distance. As such, the learning weight $w_{ji}{}^{r}$ is expressed as the reciprocal of the distance between the vector indicating the prediction probability $[p_{ji}]$ and the vector indicating the prediction probability $[pq_r]$.

<Model Learning by Weighting 41jt>

Next, a specific example of model learning by weighting 41jt (411t to 413t) illustrated in FIG. 4 will be explained.

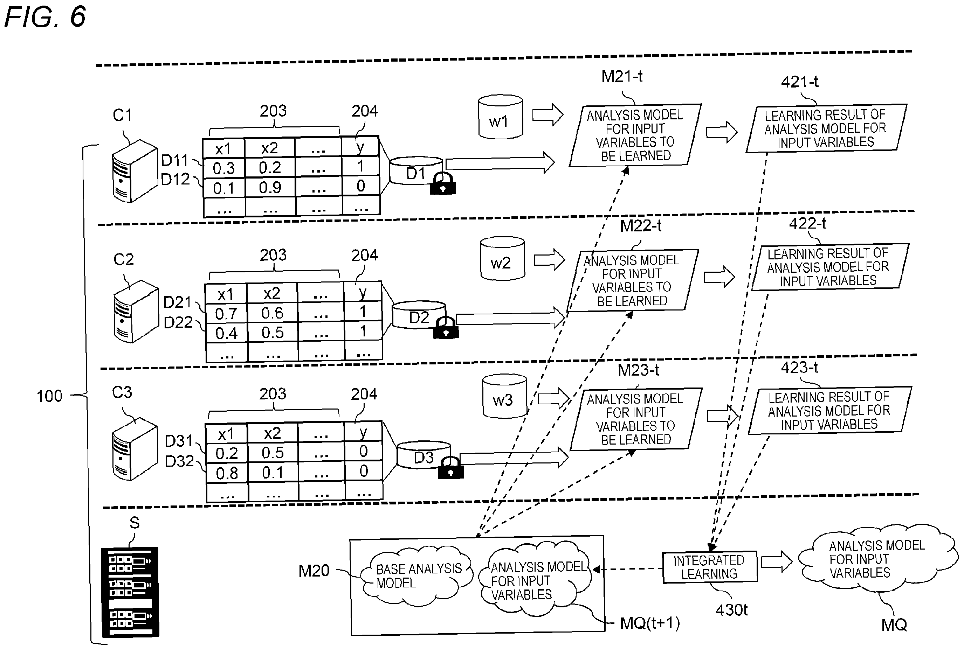

FIG. 6 is an explanatory diagram illustrating a specific example of model learning by weighting 411t illustrated in FIG. 4. The client terminal C1 updates the analysis model for input variables to be learned M21 -t using the explanatory variable 203 and objective variable 204 of the learning data set D1 and the learning weight w1, and outputs the learning result of analysis model for input variables 421-t.
The client terminal C2 updates the analysis model for input variables to be learned M22-t using the explanatory variable 203 and objective variable 204 of the learning data set D2 and the learning weight w2, and outputs the learning result of analysis model for input variables 422-t.
The client terminal C3 updates the analysis model for input variables to be learned M23-t using the explanatory variable 203 and objective variable 204 of the learning data set D3 and the learning weight w3, and outputs the learning result of analysis model for input variables 423-t.
In the integrated learning 430t, the server S integrates the learning results of analysis model for input variables 421-t, 422-t, and 423-t to generate the next analysis model for input variables MQ(t+1). The server S transmits the analysis model for input variables MQ(t+1) or integrated model parameter $\theta^{(t+1)}$ thereof to the client terminals C1 to C3. Accordingly, using the received information, the client terminal C1 sets the analysis model for input variables to be learned M21-t in the next federated learning FL2, the client terminal C2 sets the analysis model for input variables to be learned M22-t in the next federated learning FL2, and the client terminal C3 sets the analysis model for input variables to be learned M23-t in the next federated learning FL2. The analysis model for input variables MQ is an analysis model determined when the federated learning FL2 ends.
Equation (10) used in the federated learning FL2 of the analysis model for input variables is defined below.

$$[y] = f(x_q; \theta_q) \ \dots (10)$$

The above equation (10) defines the analysis model for input variables MQ. $x_q$ is the explanatory variable 203 of input variable Q, and $\theta_q$ is an integrated model parameter of the analysis model for input variables MQ. [y] is a column vector of predicted values of the objective variable 204 for each data sample i of the input variable Q, that is, an inference result Ar.
[Formula 6] Equation (11)

$$F\left(\theta_j{}^{t}\right) \overset{\text{def}}{=} \frac{1}{N_j} \sum_{i}^{N_j} w_{ji}{}^{r} * loss\left(y_{ji}, [y_{ji}]^{t}; \theta_j{}^{t}\right) \ \dots (11)$$

The above equation (11) defines the loss function $F(\theta_j{}^{t})$ in the analysis model for input variables to be learned M2j-t in the client terminal Cj in the t-th federated learning FL2. $y_{ji}$ is the objective variable 204 of a certain data sample i of the learning data set Dj, and $[y_{ji}]$ is a predicted value thereof. $[y_{ji}]$ of all data samples i of the learning data set Dj is $[y_j]$. $w_{ji}{}^{r}$ is a learning weight calculated by the above equation (9).
[Formula 7] Equation (12)

$$ga_j{}^{t} = \nabla F\left(\theta_j{}^{t}\right) \ \dots (12)$$

The above equation (12) defines the gradient $ga_j{}^{t}$ of the model parameter $\theta_j{}^{t}$ in the t-th federated learning FL2. The gradient $ga_j{}^{t}$ is calculated in the client terminal Cj.

[Formula 8] Equations (13), (14), (15)

$$\theta_j^{(t+1)} \leftarrow \theta_j^{\ t} - \eta \sum_{j=1}^{K} \frac{W_j^{\ r}}{W^r} ga_j^{\ t} \quad \text{... (13)}$$

$$W_j^{\ r} = \sum_i^{N_j} w_{ji}^{\ r} \quad \text{... (14)}$$

$$W^r = \sum_{j=1}^{K} W_j^{\ r} \quad \text{... (15)}$$

The above equation (13) is a calculation expression for updating each model parameter $\theta_j^t$ in the t-th federated learning FL2, and is executed in the model learning by weighting 41jt of the client terminal Cj. $W_j^r$ on the right side of the above equation (13) is the total sum of the learning weights $w_{ji}^r$ of the client terminals Cj in the t-th federated learning FL2, as illustrated in the above equation (14). $W^r$ on the right side of the above equation (13) is the total sum of the learning weights $W_1^r$ to $W_K^r$ of the client terminals C1 to CK as illustrated in the above equation (15).

The client terminal Cj transmits the updated model parameters $\theta_1^{(t+1)}$ to $\theta_3^{(t+1)}$ to the server S as the learning results of analysis model for input variables 421-t, 422-t, and 423-t. In the integrated learning 430t, the server S averages and integrates the learning result of analysis model for input variables 421-t (updated model parameter $\theta_1^{(t+1)}$), the learning result of analysis model for input variables 422-t (updated model parameter $\theta_2^{(t+1)}$), and the learning result of analysis model for input variables 423-t (updated model parameter $\theta_3^{(t+1)}$), for example, to calculate the updated integrated model parameter $\theta^{(t+1)}$ for the client terminals C1 to C3 and generate the analysis model for input variables MQ(t+1).

[Formula 9] Equations (16), (17)

$$\theta_j^{(t+1)r} \leftarrow \theta_j^{\ tr} - \eta * ga_j^{\ tr} \quad \text{... (16)}$$

$$\theta^{(t+1)r} = \sum_{j=1}^{K} \frac{W_j^{\ r}}{W^r} \theta_j^{(t+1)r} \quad \text{... (17)}$$

The above equation (16) is a calculation expression for updating each model parameter $\theta_j^t$ in the t-th federated learning FL2 when the gradient $ga_j^t$ is received from the client terminal Cj as the learning result of analysis model for input variables 42j-t, and is executed by the integrated learning 430t of the server S.

The above equation (17) is a calculation expression for updating the integrated model parameter $\theta^t$ in the t-th federated learning FL2 when the gradient $ga_j^t$ is received from the client terminal Cj as the learning result of analysis model for input variables 42j-t, and is executed by the integrated learning 430t of the server S. Specifically, for example, the server S generates the model parameter $\theta^{(t+1)}$ of the analysis model for input variables MQ(t+1) using the updated integrated model parameter $\theta_j^{t+1}$, the learning weight $W_j^r$, and the learning weight $W^r$. Accordingly, the analysis model for input variables MQ(t+1) is obtained.

<Federated Learning Sequence>

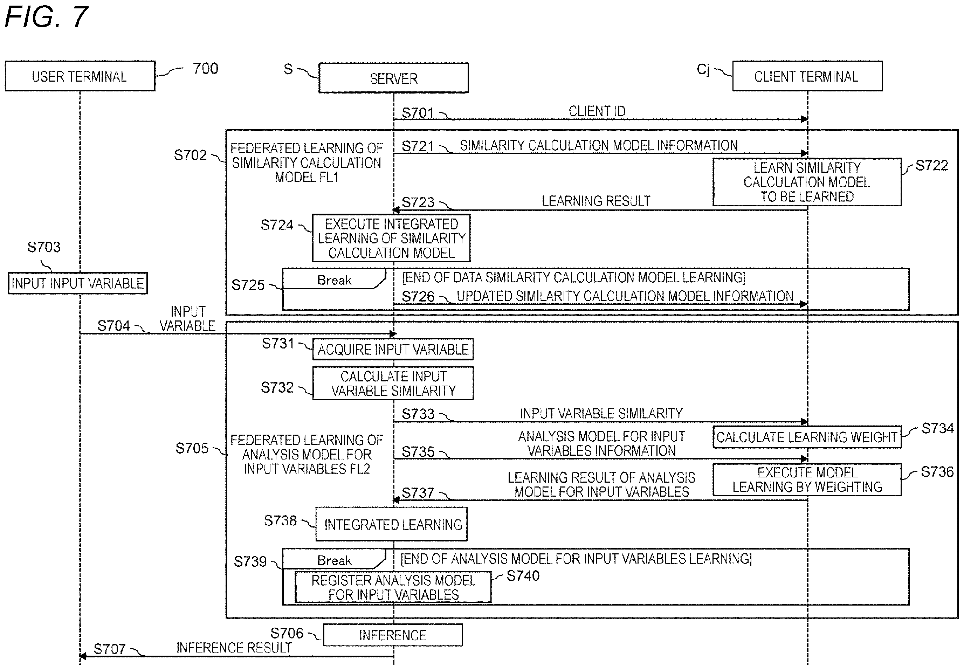

FIG. 7 is a sequence diagram of federated learning in the federated learning system 100 according to Example 1. First, before the federated learning FL1 and FL2, the server S transmits the client ID 201 to each client terminal Ck (step S701). The client terminal Ck associates the client ID 201 with the learning data set Dk.

Next, the federated learning system 100 executes the federated learning FL1 of the similarity calculation model (step S702), and executes federated learning FL2 of the analysis model for input variables (step S703).

In the federated learning FL1 of the similarity calculation model (step S702), the server S transmits similarity calculation model information (integrated similarity calculation model M1 (t+1) or integrated model parameter $\varphi^{t+1}$ thereof) to the client terminal Ck (step S721).

The client terminal Cj learns the similarity calculation model to be learned M1jt using the learning data set Dj and the similarity calculation model information (step S722).

The client terminal Cj transmits the learning result 32jt in step S722 to the server S (step S723).

The server S executes integrated learning 330t of the similarity calculation model to be learned M1jt using the learning result 32jt (step S724). The server S determines whether the end condition of the integrated learning 330t (step S724) of the similarity calculation model to be learned M1jt is satisfied (step S725).

When the end condition is not satisfied, the server S transmits the integrated similarity calculation model information (integrated similarity calculation model M1(t+1) or model parameter thereof) of the updated integrated similarity calculation model M1(t+1) to the client terminal Cj (step S721).

When the end condition is satisfied, the server S registers the updated integrated similarity calculation model information (integrated similarity calculation model M1 or model parameter thereof) (step S726). Accordingly, the federated learning FL1 of the similarity calculation model (step S702) is ended.

A user terminal 700 that can communicate with the server S receives input of the input variable Q (step S703), and transmits the input variable Q to the server S (step S704). The user terminal 700 may be the client terminal Cj. The input variable Q may be directly input to the server S.

In federated learning FL2 of the analysis model for input variables (step S705), the server S acquires the input variable Q (step S731). Next, the server S executes the input variable similarity calculation 404 using the integrated similarity calculation model M1, and outputs the input variable similarity QS (step S732).

The server S transmits the input variable similarity QS to the client terminal Cj (step S733). As illustrated in FIG. 5, the client terminal Cj calculates the learning weight wj using the input variable similarity QS (step S734).

When t = 1, the server S transmits the base analysis model M20 (or model parameter $\theta^1$ thereof) to the client terminal Cj as analysis model for input variables information (step S735), and when t $\geq$ 2, the server S transmits the analysis model for input variables to be learned M2j-t (or model parameter $\theta_j^t$ thereof) to the client terminal Cj as the analysis model for input variables information (step S735).

As illustrated in FIG. 6, the client terminal Cj executes model learning by weighting to generate the learning result of analysis model for input variables 42j-t (step S736), and the client terminal Cj transmits the learning result of analysis model for input variables 42j-t to the server S (step S737).

As illustrated in FIG. 6, the server S acquires the learning result of analysis model for input variables 42j-t from the client terminal Cj, executes the integrated learning 430t, and generates the (t+1)-th analysis model for input variables MQ(t+1) (step S738).

The server S determines whether the end condition of the integrated learning 430t (step S738) is satisfied (step S739).

When the end condition is not satisfied, the server S transmits the updated analysis model for input variables information to the client terminal Cj. Accordingly, the client terminal Cj updates the analysis model for input variables to be learned M2j-t.

When the end condition is satisfied, the server S registers the updated analysis model for input variables MQ(t+1) as the analysis model for input variables MQ (step S740). Accordingly, the federated learning FL2 of the analysis model for input variables is ended (step S705).

Next, the server S inputs the input variable Q to the analysis model for input variables MQ to execute the inference IN (step S706). Then, the server S transmits the inference result A to the user terminal 700 (step S707).

Thus, according to Example 1, the analysis model for input variables MQ considering the value of the input variable Q can be generated as an integrated model obtained by integrating the analysis models for input variables to be learned M21 -t to M23-t of the client terminals C1 to C3.


[Example 2]

Next, Example 2 will be described. In Example 2, an example will be described in which federated learning of individual analysis model is executed instead of the federated learning FL2 of the analysis model for input variables. In Example 2, since the description will focus on the differences from Example 1, the description of the common parts with Example 1 will be omitted.

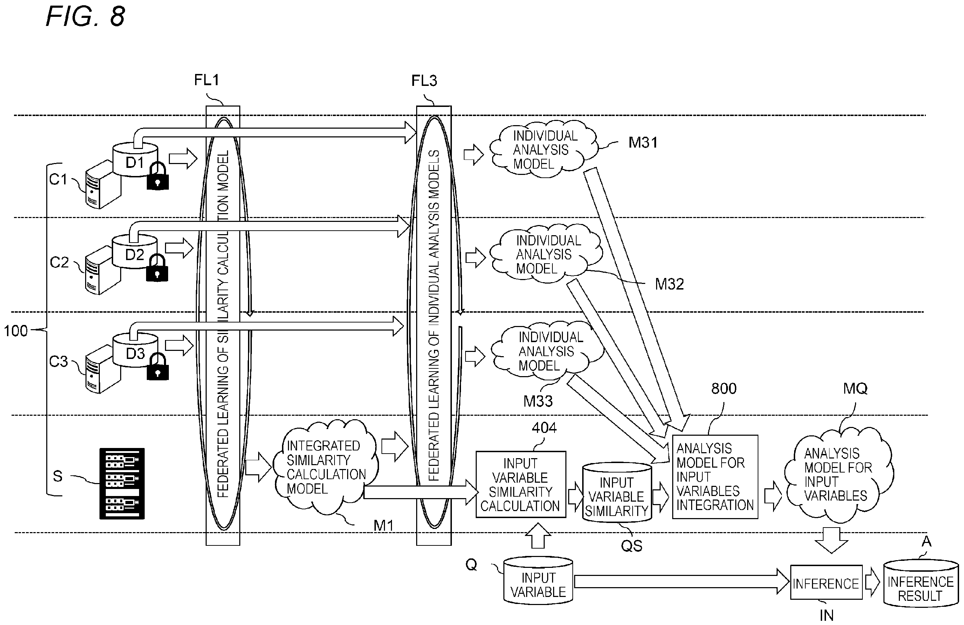

FIG. 8 is an explanatory diagram illustrating an example of federated learning according to Example 2. Federated learning FL3 of the individual analysis model is federated learning that uses the integrated similarity calculation model M1 to generate an individual analysis model M3j (M31 to M33) for the client terminal Cj obtained from each of the client terminals C1 to C3.

Specifically, for example, the individual analysis model M31 is a prediction model obtained by integrating individual analysis models for the client terminal C1 (j = 1) from the client terminals C1 to C3, the individual analysis model M32 is a prediction model obtained by integrating the individual analysis models for the client terminal C2 (j = 2) from the client terminals C1 to C3, and the individual analysis model M33 is a prediction model obtained by integrating the individual analysis models for the client terminal C3 (j = 3) from the client terminals C1 to C3.

By executing the federated learning FL3 of the individual analysis model, an appropriate individual analysis model M3j (M31 to M33) is generated for each client terminal Cj.

The server S executes an analysis model for input variables integration 800 that integrates the individual analysis models M31 to M33 using the input variable similarity QS obtained in the input variable similarity calculation 404, and generates the analysis model for input variables MQ. When the input variable Q is input to the analysis model for input variables MQ, the inference IN is executed and the inference result A is obtained.

<Federated Learning FL3 of Individual Analysis Models>

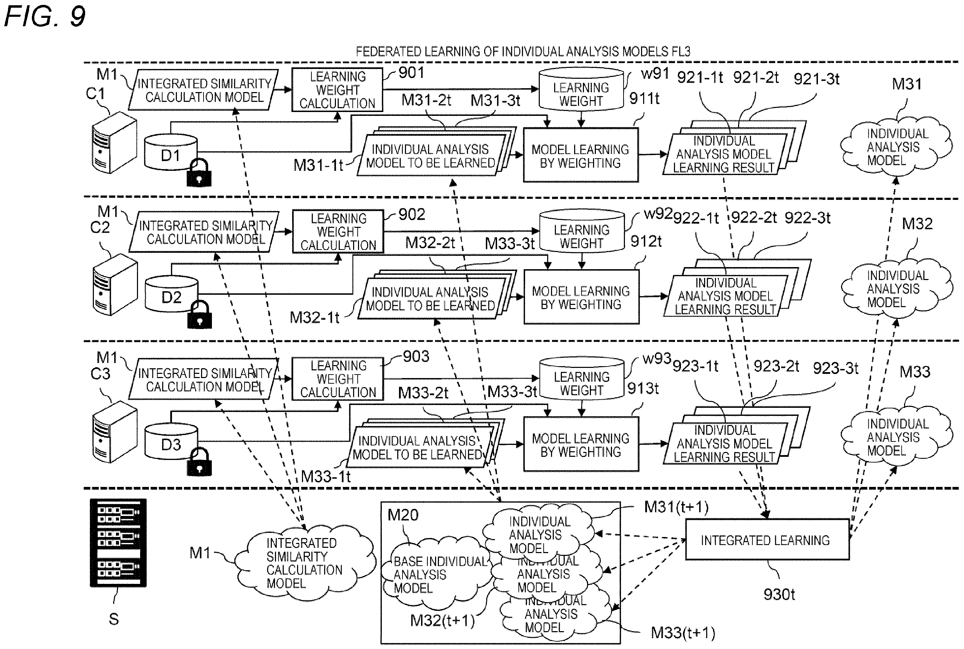

FIG. 9 is an explanatory diagram illustrating an example of the federated learning FL3 of the individual analysis model. The client terminal C1 executes learning weight calculation 901. Specifically, for example, the client terminal Cj calculates the prediction probability $[p_j]$ indicating which learning data set Dk is similar to each data sample i of the learning data set Dj by inputting the explanatory variable 301 of the learning data set Dj into the integrated similarity calculation model M1 (the above equation (8)) generated in FIG. 3. The client terminal Cj calculates a learning weight w9j using the calculated prediction probability $[p_j]$.

The server S has an individual analysis model M20 (hereinafter referred to as base individual analysis model) as a base. The base individual analysis model M20 may be an untrained neural network, or may be a trained neural network in which the model parameter $\theta^t$ such as a weight or bias is set. The server S transmits the base individual analysis model M20 to the client terminal Ck.

If the client terminal Ck has an untrained neural network, the server S may transmit the model parameter $\theta^t$ to the client terminal Ck, and the client terminal Ck may construct the base individual analysis model M20 by setting the model parameter $\theta^t$ received from the server S to the untrained neural network.

The base individual analysis model M20 becomes an individual analysis model to be learned M2j-kt of the first federated learning FL3 in the client terminal Cj. t is an ascending natural number starting from 1 and indicating the number of execution times of the federated learning FL3 of the individual analysis model.

When j = 1, the client terminal C1 holds individual analysis models to be learned M31 - 1t to M31-3t. When j = 2, the client terminal C2 holds individual analysis models to be learned M32-1t to M32-3t. When j = 3, the client terminal C3 holds individual analysis models to be learned M33-1t to M33-3t.

The client terminal Cj executes model learning by weighting 91jt. Specifically, for example, the client terminal Cj calculates a predicted value $[y_j^k]$ of the objective variable 204 for each individual analysis model to be learned M3j-kt by inputting the explanatory variable 203 of the learning data set Dj into each individual analysis model to be learned M3j-kt. The client terminal Cj calculates a loss function $F(\theta_j^{kt})$ for each individual analysis model to be learned M3j-kt using the learning weight w9j, the objective variable y, the predicted value $[y_j^k]$, and the model parameter $\theta_j^{kt}$.

Then, the client terminal Cj calculates the gradient $ga_j^{kt}$ of the model parameter $\theta_j^{kt}$ as an individual analysis model learning result 92j-kt, and updates the model parameter $\theta_j^{kt}$ to the model parameter $\theta_j^{k(t+1)}$. The model parameter $\theta_j^{k(t+1)}$ is also included in the individual analysis model learning result 92j-kt.

When j = 1, the client terminal C1 generates individual analysis model learning results 921-1t to 921-3t. The individual analysis model learning result 921-1t is a model parameter $\theta_1^{1t}$ or gradient $ga_1^{1t}$ thereof updated in the individual analysis model to be learned M31-1t. The individual analysis model learning result 921-2t is a model parameter $\theta_1^{2t}$ or gradient $ga_1^{2t}$ thereof updated in the individual analysis model to be learned M31-2t. The individual analysis model learning result 921-3t is a model parameter $\theta_1^{3t}$ or gradient $ga_1^{3t}$ thereof updated in the individual analysis model to be learned M31-3t.

When j = 2, the client terminal C2 generates individual analysis model learning results 922-1t to 922-3t. The individual analysis model learning result 922-1t is a model parameter $\theta_2^{1t}$ or gradient $ga_2^{1t}$ thereof updated in the individual analysis model to be learned M32-1t. The individual analysis model learning result 922-2t is a model parameter $\theta_2^{2t}$ or gradient $ga_2^{2t}$ thereof updated in the individual analysis model to be learned M32-2t. The individual analysis model learning result 922-3t is the model parameter $\theta_2^{3t}$ or gradient $ga_2^{3t}$ thereof updated in the individual analysis model to be learned M32-3t.

When j = 3, the client terminal C3 generates individual analysis model learning results 923-1t to 923-3t. The individual analysis model learning result 923-1t is a model parameter $\theta_3^{1t}$ or gradient $ga_3^{1t}$ thereof updated in the individual analysis model to be learned M33-1t. The individual analysis model learning result 923-2t is the model parameter $\theta_3^{2t}$ or gradient $ga_3^{2t}$ thereof updated in the individual analysis model to be learned M33-2t. The individual analysis model learning result 923-3t is the model parameter $\theta_3^{3t}$ or gradient $ga_3^{3t}$ thereof updated in the individual analysis model to be learned M33-3t.

The server S receives the individual analysis model learning result 92j-kt from the client terminal Ck. Specifically, for example, the server S receives the individual analysis model learning results 921-1t to 921-3t from the client terminal C1, receives the individual analysis model learning results 922-1t to 922-3t from the client terminal C2, and receives the individual analysis model learning results 923-1t to 923-3t from the client terminal C3.

The server S executes integrated learning 930t in the t-th federated learning FL3, and generates the next individual analysis model M3k(t+1). Specifically, for example, the server S integrates the individual analysis model learning results 921-1t, 922-1t, and 923-1t to generate an individual analysis model M31(t+1). The server S integrates the individual analysis model learning results 921-2t, 922-2t, and 923-2t to generate an individual analysis model M32(t+1). The server S integrates the individual analysis model learning results 921-3t, 922-3t, and 923-3t to generate an individual analysis model M33(t+1).

The server S transmits the individual analysis model M3j(t+1) or integrated model parameter $\theta_j^{t+1}$ thereof to the client terminal Ck. Accordingly, the individual analysis model to be learned M3j-kt in the next federated learning FL3 is set in the client terminal Ck.

Specifically, for example, the server S transmits the individual analysis model M31(t+1) or integrated model parameter $\theta_1^{t+1}$ thereof to the client terminals C1 to C3. Accordingly, using the received information, the client terminal C1 sets the individual analysis model to be learned M31-1t in the next federated learning FL3, the client terminal C2 sets the individual analysis model to be learned M32-1t in the next federated learning FL3, and the client terminal C3 sets the individual analysis model to be learned M33-1t in the next federated learning FL3.

The server S transmits an individual analysis model M32(t+1) or integrated model parameter $\theta_2^{t+1}$ thereof to the client terminals C1 to C3. Accordingly, using the received information, the client terminal C1 sets the individual analysis model to be learned M31-2t in the next federated learning FL3, the client terminal C2 sets the individual analysis model to be learned M32-2t in the next federated learning FL3, and the client terminal C3 sets the individual analysis model to be learned M33-2t in the next federated learning FL3.

The server S transmits the individual analysis model M33(t+1) or integrated model parameter $\theta_3^{t+1}$ thereof to the client terminals C1 to C3. Accordingly, using the received information, the client terminal C1 sets the individual analysis model to be learned M31-3t in the next federated learning FL3, the client terminal C2 sets the individual analysis model to be learned M32-3t in the next federated learning FL3, and the client terminal C3 sets the individual analysis model to be learned M33-3t in the next federated learning FL3.

As such, the federated learning FL3 is repeatedly executed. When the number of execution times t reaches a predetermined threshold T2, or when the accuracy of the individual analysis models M31(t+1) to M3K(t+1) all reach the target accuracy, the server S ends the federated learning FL3, outputs the latest individual analysis model M3k(t+1) as an individual analysis model M3k, and transmits the individual analysis model M3k to the client terminal Ck.

Specifically, for example, the server S outputs the individual analysis model M31(t+1) as the individual analysis model M31 and transmits the individual analysis model M31 to the client terminal C1. The server S outputs the individual analysis model M32(t+1) as the individual analysis model M32 and transmits the individual analysis model M32 to the client terminal C2. The server S outputs the individual analysis model M33(t+1) as the individual analysis model M33 and transmits the individual analysis model M33 to the client terminal C3.

<Learning Weight Calculation 90k>

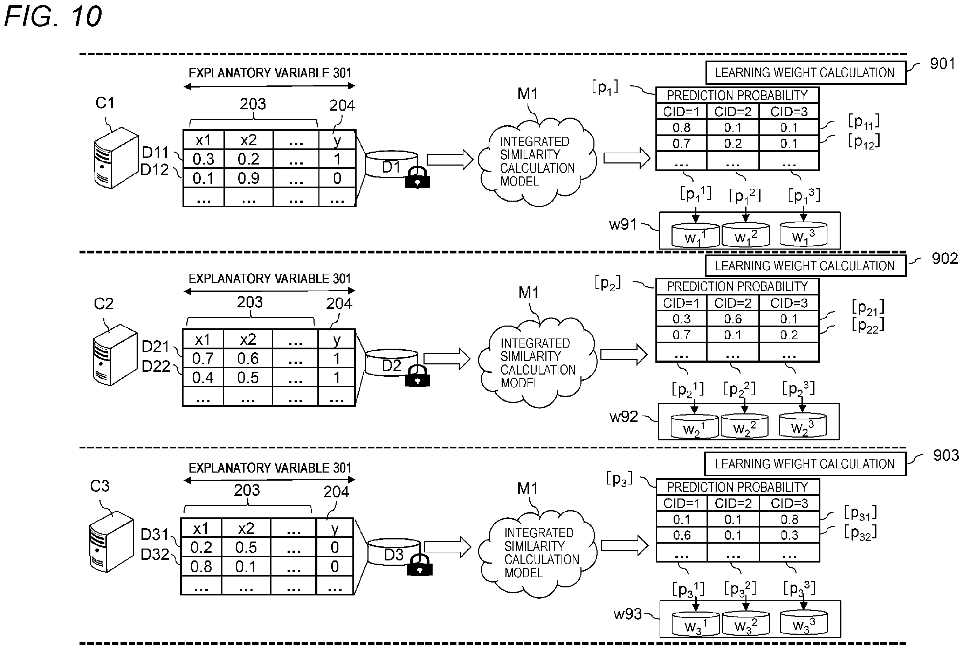

FIG. 10 is an explanatory diagram illustrating a specific example of a learning weight calculation 90k (901 to 903) illustrated in FIG. 9. In FIG. 10, the learning data set D1 includes D11 and D12 as data samples i, the learning data set D2 includes D21 and D22 as data samples i, and the learning data set D3 includes D31 and D32 as data samples i.

The client terminal Cj inputs the explanatory variable 301 of the learning data set Dj into the integrated similarity calculation model M1, and calculates the prediction probability [$p_j$]. The column of CID = k of prediction probability [$p_j$] is a column vector indicating a prediction probability [$p_j^k$] indicating how much similar all data samples i of the learning data set Dj are to the learning data set Dk. The prediction probability [$p_{ji}$] is a row vector indicating the prediction probability indicating how much similar a certain data sample i in the learning data set Dj is to each learning data set Dk.

Specifically, for example, when j = 1, the client terminal C1 inputs the explanatory variable 301 of the learning data set D1 into the integrated similarity calculation model M1, and calculates a prediction probability [$p_1$]. By inputting the explanatory variable 301 of the data sample D11 into the integrated similarity calculation model M1, a prediction probability [$p_{11}$] corresponding to the data sample D11 is calculated, and by inputting the explanatory variable 301 of the data sample D12 into the integrated similarity calculation model M1, a prediction probability [piz] corresponding to the data sample D12 is calculated. The columns of CID = 1 to 3 of the prediction probability [$p_1$] are prediction probabilities [$p_1^1$], [$p_1^2$], and [$p_1^3$] indicating how much similar each data sample i of the learning data set D1 is to the learning data sets D1 to D3. The client terminal C1 calculates learning weights $w_1^1$, $w_1^2$, and $w_1^3$ for the prediction probabilities [$p_1^1$], [$p_1^2$], and [$p_1^3$], respectively. Information that summarizes the learning weights $w_1^1$, $w_1^2$, and $w_1^3$ is the learning weight w91.

When j = 2, the client terminal C2 inputs the explanatory variable 301 of the learning data set D2 to the integrated similarity calculation model M1, and calculates a prediction probability [pz]. By inputting the explanatory variable 301 of the data sample D21 into the integrated similarity calculation model M1, a prediction probability [$p_{21}$] corresponding to the data sample D21 is calculated, and by inputting the explanatory variable 301 of the data sample D22 into the integrated similarity calculation model M1, a prediction probability [pzz] corresponding to the data sample D22 is calculated. The columns of CID = 1 to 3 of the prediction probability [pz] are prediction probabilities [$p_2^1$], [$p_2^2$], and [$p_2^3$] indicating how much similar each data sample i of the learning data set D2 is to the learning data sets D1 to D3. The client terminal C2 calculates learning weights $w_2^1$, $w_2^2$, and $w_2^3$ for the prediction probabilities [$p_2^1$], [$p_2^2$], and [$p_2^3$], respectively. Information that summarizes the learning weights $w_2^1$, $w_2^2$, and $w_2^3$ is the learning weight w92.

When j = 3, the client terminal C3 inputs the explanatory variable 301 of the learning data set D3 to the integrated similarity calculation model M1, and calculates a prediction probability $[p_3]$. By inputting the explanatory variable 301 of the data sample D31 into the integrated similarity calculation model M1, a prediction probability $[p_{31}]$ corresponding to the data sample D31 is calculated, and by inputting the explanatory variable 301 of the data sample D32 into the integrated similarity calculation model M1, a prediction probability $[p_{32}]$ corresponding to the data sample D32 is calculated. The columns of CID = 1 to 3 of the prediction probability $[p_3]$ are prediction probabilities $[p_3^1]$, $[p_3^2]$, and $[p_3^3]$ indicating how much similar each data sample i of the learning data set D3 is to the learning data sets D1 to D3. The client terminal C3 calculates learning weights $w_3^1$, $w_3^2$, and $w_3^3$ for the predicted probabilities $[p_3^1]$, $[p_3^2]$, and $[p_3^3]$, respectively. Information that summarizes the learning weights $w_3^1$, $w_3^2$, and $w_3^3$ is the learning weight w93.

The formula used to calculate the learning weight $w_j^k$ in the federated learning FL3 of the individual analysis model is defined below.

[Formula 10] Equation (18)

$$w_{ji}^k = \frac{\frac{1}{1-[p_{ji}^k]}}{\sum_i^{N_k} \frac{1}{1-[p_{ji}^k]}} \ ... \ (18)$$

$w_{ji}^k$ on the left side of the above equation (18) is a learning weight applied to the similarity relationship between the data sample i of the learning data set Dj and the learning data set Dk. $[p_{ji}^k]$ on the right side is a prediction probability indicating how much similar the data sample i of the training data set Dj is to the learning data set Dk. A set of learning weights $w_{ji}^k$ of all data samples i of the learning data set Dj is the learning weight $w_j^k$.

<Model Learning by Weighting 91kt>

Next, a specific example of model learning by weighting 91kt (911t to 913t) illustrated in FIG. 9 will be described.

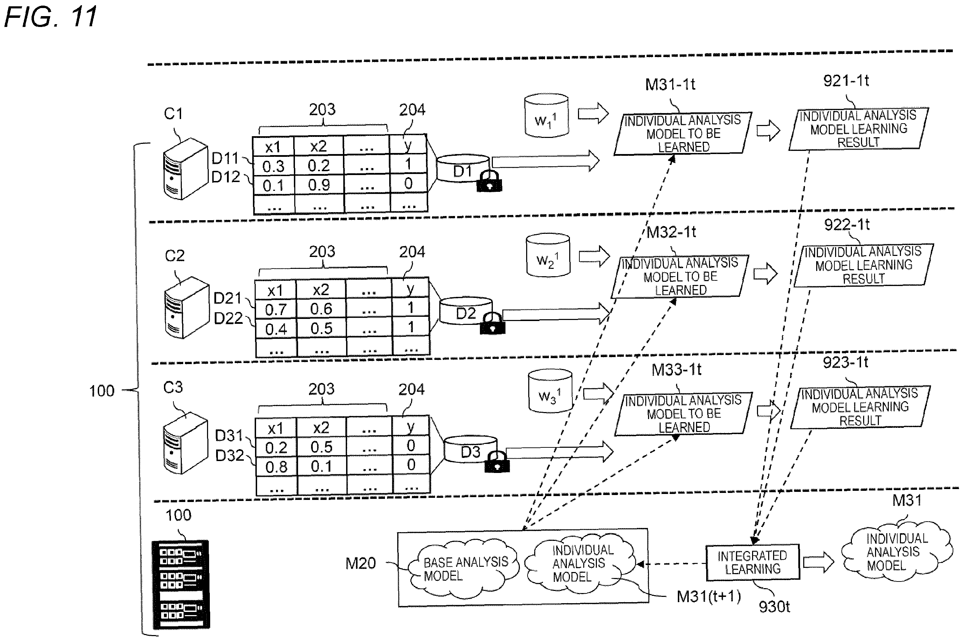

FIG. 11 is an explanatory diagram illustrating a specific example of the model learning by weighting 911t illustrated in FIG. 9. The client terminal C1 updates the individual analysis model to be learned M31-1t using the explanatory variable 203 and the objective variable 204 of the learning data set D1 and the learning weight $w_1^1$, and outputs the individual analysis model learning result 921-1t.

The client terminal C2 updates the individual analysis model to be learned M32-1t using the explanatory variable 203 and the objective variable 204 of the learning data set D2 and the learning weight $w_2^1$, and outputs the individual analysis model learning result 922-1t.

The client terminal C3 updates the individual analysis model to be learned M33-1t using the explanatory variable 203 and the objective variable 204 of the learning data set D3 and the learning weight $w_3 1$, and outputs the individual analysis model learning result 923-1t.

The server S integrates the individual analysis model learning results 921-1t, 922-1t, and 923-1t in the integrated learning 930t to generate the next individual analysis model M31(t+1). The server S transmits the individual analysis model M31(t+1) or integrated model parameter $\theta_1^{t+1}$ thereof to the client terminals C1 to C3. Accordingly, using the received information, the client terminal C1 sets the individual analysis model to be learned M31-1t in the next federated learning FL3, the client terminal C2 sets the individual analysis model to be learned M32-1t in the next federated learning FL3, and the client terminal C3 sets the individual analysis model to be learned M33-1t in the next federated learning FL3. The individual analysis model M31 is an individual analysis model of the client terminal C1 determined when the federated learning FL3 ends.

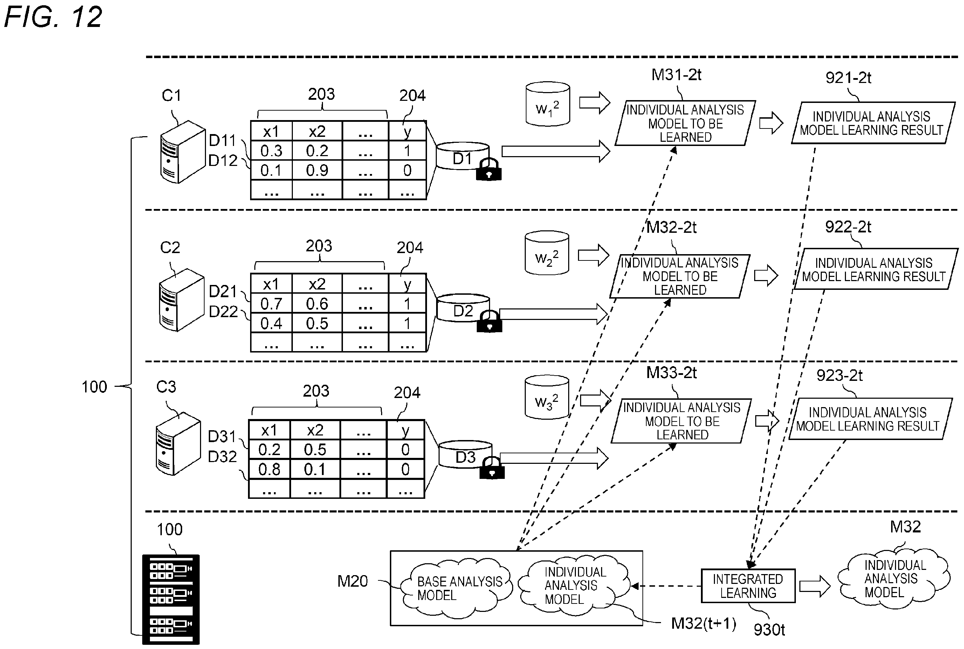

FIG. 12 is an explanatory diagram illustrating a specific example of the model learning by weighting 912t illustrated in FIG. 9. The client terminal C1 updates the individual analysis model to be learned M31-2t using the explanatory variable 203 and the objective variable 204 of the learning data set D1 and the learning weight $w_1^2$ and outputs the individual analysis model learning result 921-2t.

The client terminal C2 updates the individual analysis model to be learned M32-2t using the explanatory variable 203 and the objective variable 204 of the learning data set D2 and the learning weight $w_2^2$ and outputs the individual analysis model learning result 922-2t.

The client terminal C3 updates the individual analysis model to be learned M33-2t using the explanatory variable 203 and the objective variable 204 of the learning data set D3 and the learning weight $w_3^2$ and outputs the individual analysis model learning result 923-2t.

The server S integrates the individual analysis model learning results 921-2t, 922-2t, and 923-2t in the integrated learning 930t to generate the next individual analysis model M32(t+1). The server S transmits the individual analysis model M32(t+1) or integrated model parameter $\theta_2^{t+1}$ thereof to the client terminals C1 to C3. Accordingly, using the received information, the client terminal C1 sets the individual analysis model to be learned M31-2t in the next federated learning FL3, the client terminal C2 sets the individual analysis model to be learned M32-2t in the next federated learning FL3, and the client terminal C3 sets the individual analysis model to be learned M33-2t in the next federated learning FL3. The individual analysis model M32 is an individual analysis model of the client terminal C2 determined when the federated learning FL3 ends.

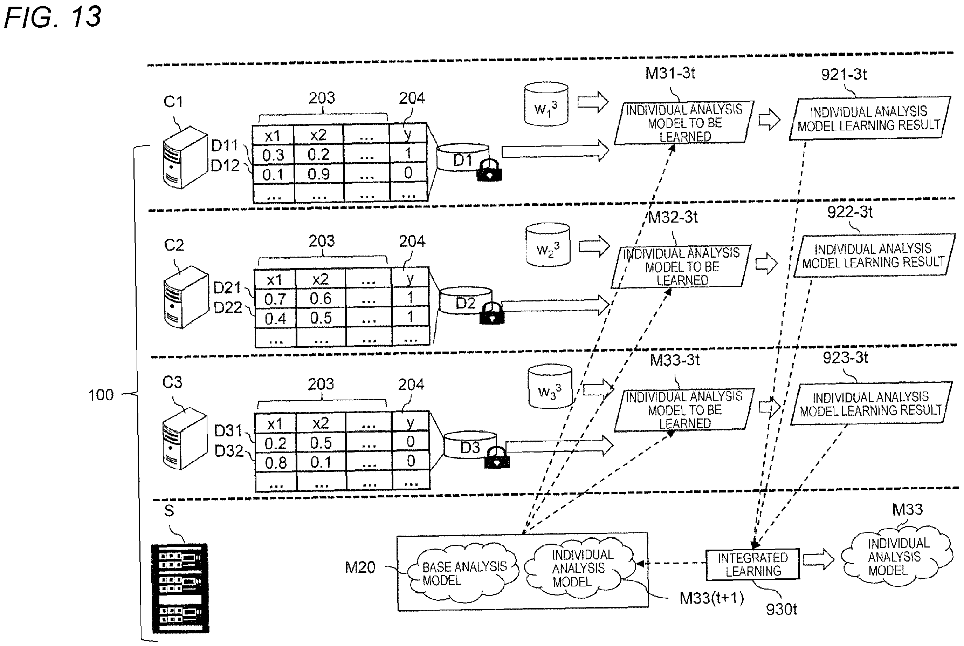

FIG. 13 is an explanatory diagram illustrating a specific example of the model learning by weighting 913t illustrated in FIG. 9. The client terminal C1 updates the individual analysis model to be learned M31-3t using the explanatory variable 203 and the objective variable 204 of the learning data set D1 and the learning weight $w_1^3$ and outputs the individual analysis model learning result 921-3t.

The client terminal C2 updates the individual analysis model to be learned M32-3t using the explanatory variable 203 and the objective variable 204 of the learning data set D2 and the learning weight $w_2^3$ and outputs the individual analysis model learning result 922-3t.

The client terminal C3 updates the individual analysis model to be learned M33-3t using the explanatory variable 203 and the objective variable 204 of the learning data set D3 and the learning weight $w_3^3$ and outputs the individual analysis model learning result 923-3t.

The server S integrates the individual analysis model learning results 921-3t, 922-3t, and 923-3t in the integrated learning 930t to generate the next individual analysis model M33(t+1). The server S transmits the individual analysis model M33(t+1) or integrated model parameter $\theta_3^{t+1}$ thereof to the client terminals C1 to C3. Accordingly, using the received information, the client terminal C1 sets the individual analysis model to be learned M31-3t in the next federated learning FL3, the client terminal C2 sets the individual analysis model to be learned M32-3t in the next federated learning FL3, and the client terminal C3 sets the individual analysis model to be learned M33-3t in the next federated learning FL3. The individual analysis model M33 is an individual analysis model of the client terminal C3 determined when the federated learning FL3 ends.

The formulas used in the federated learning FL3 of the individual analysis model are defined below.

$$[y_j] = f(x_j;\theta_j) \ ... \ (19)$$

The above equation (19) defines an individual analysis model M2j. $x_j$ is the explanatory variable 203 of the learning data set Dj, and $\theta_j$ is an integrated model parameter of the individual analysis model M2j. $[y_j]$ is the predicted value of the objective variable 204 of the learning data set Dj.

[Formula 11] Equations (20)

$$F\left(\theta_j^{kt}\right) \overset{\text{def}}{=} \frac{1}{N_j}\sum_i^{N_j} w_{ji} * loss\left(y_{ji}, [y_{ji}]^t; \theta_j^{kt}\right) \ ... \ (20)$$

The above equation (20) defines the loss function $F(\theta_j^{kt})$ in the individual analysis model to be learned M2j-kt in the t-th federated learning FL3. $y_{ji}$ is the objective variable 204 of a certain data sample i of the learning data set Dj, and $[y_{ji}]$ is a predicted value thereof. $[y_{ji}]$ of all data samples i of the learning data set Dj is $[y_j]$. $w_{ji}^k$ is a learning weight calculated by the above equation (18).

[Formula 12] Equation (21)

$$ga_j^{kt} = \nabla F\left(\theta_j^{kt}\right) \ ... \ (21)$$

The above equation (21) defines the gradient $ga_j^{kt}$ of the model parameter $\theta_j^{kt}$ in the t-th federated learning FL3. The gradient $ga_j^{kt}$ is calculated at the client terminal Cj.

[Formula 13] Equations (22), (23), (24)

$$\theta_j^{k(t+1)} \leftarrow \theta_j^{kt} - \eta \sum_{k=1}^K \frac{P_j^{kt}}{P_j^t} ga_j^{kt} \ ... \ (22)$$

$$P_j^t = \sum_{k=1}^K P_j^{kt} \ ... \ (23)$$

$$P_j^{kt} = \sum_{i=1}^{N_k} [p_{ji}^k]^t \ ... \ (24)$$

The above equation (22) is a calculation expression for updating each model parameter $\theta_j^{kt}$ in the t-th federated learning FL3, and is executed in the model learning by weighting 91jt of the client terminal Cj. $P_j^t$ is the total sum of $P_j^{kt}$ of the client terminals Ck in the t-th federated learning FL3, as shown in the above equation (23). $P_j^{kt}$ is the total sum of the prediction probabilities $[p_{ji}^k]t$ in the client terminal Cj in the t-th federated learning FL3, as shown in the above equation (24).

The client terminal Cj transmits the updated model parameters $\theta_j^{1(t+1)}$ to $\theta_j^{3(t+1)}$ to the server S as individual analysis model learning results 92j-1t, 92j-2t, and 92j-3t. In the integrated learning 930t, the server S averages and integrates the individual analysis model learning result 921-1t (updated model parameter $\theta_1^{1(t+1)}$), the individual analysis model learning result 922-1t (updated model parameter $\theta_2^{1(t+1)}$), the individual analysis model learning result 923-1t (updated model parameter $\theta_3^{1(t+1)}$), for example, to calculate the updated integrated model parameter $\theta_1^{(t+1)}$ for the client terminal C1 and generate the individual analysis model M31(t+1).

In the integrated learning 930t, the server S averages and integrates the individual analysis model learning result 921-2t (updated model parameter $\theta_1^{2(t+1)}$), the individual analysis model learning result 922-2t (updated model parameter $\theta_2^{2(t+1)}$), the individual analysis model learning result 923-2t (updated model parameter $\theta_3^{2(t+1)}$), for example, to calculate the updated integrated model parameter $\theta_2^{(t+1)}$ for the client terminal C2 and generate the individual analysis model M32(t+1).

In the integrated learning 930t, the server S averages and integrates the individual analysis model learning result 921-3t (updated model parameter $\theta_1^{3(t+1)}$), the individual analysis model learning result 922-3t (updated model parameter $\theta_2^{3(t+1)}$), the individual analysis model learning result 923-3t (updated model parameter $\theta_3^{3(t+1)}$), for example, to calculate the updated integrated model parameter $\theta_3^{(t+1)}$ for the client terminal C3 and generate the individual analysis model M33(t+1).

[Formula 14] Equations (25), (26)

$$\theta_j^{k(t+1)} \leftarrow \theta_j^{kt} - \eta * ga_j^{kt} \ ... (25)$$

$$\theta_j^{t+1} = \sum_{k=1}^{K} \frac{P_j^{kt}}{P_j^t} \theta_j^{k(t+1)} \ ... (26)$$

The above equation (25) is a calculation expression for updating each model parameter $\theta_j^{kt}$ in the t-th federated learning FL3 when the gradient $ga_j^{kt}$ and the prediction probability $[p_{ji}^k]t$ are received from the client terminal Cj as the individual analysis model learning result 92j-kt, and is executed by the integrated learning 430t of the server S.

The above equation (26) is a calculation expression for updating the integrated model parameter $\theta_j^t$ in the t-th federated learning FL3 when the gradient $ga_j^{kt}$ and the prediction probability $[p_{ji}^k]t$ are received from the client terminal Cj as the individual analysis model learning result 92j-kt, and is executed by the integrated learning 430t of the server S. Specifically, for example, the server S generates the individual analysis model M31(t+1) using the updated integrated model parameter $\theta_1^{t+1}$. The server S generates the individual analysis model M32(t+1) using the updated integrated model parameter $\theta_2^{t+1}$. The server S generates the individual analysis model M33(t+1) using the updated integrated model parameter $\theta_3^{t+1}$.

<Analysis Model for Input Variables Integration 800>

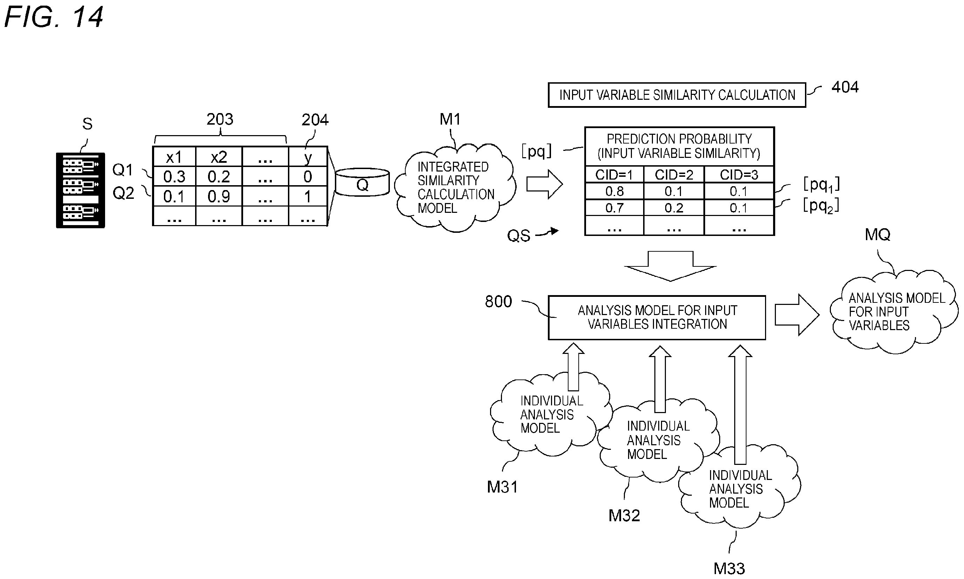

FIG. 14 is an explanatory diagram illustrating an example of the analysis model for input variables integration 800. As in Example 1, the server S inputs the input variable Q into the integrated similarity calculation model M1, executes the input variable similarity calculation 404, and outputs the input variable similarity QS.

The server S uses the input variable similarity QS to execute the analysis model for input variables integration 800 for integrating the individual analysis models M31 to M33 according to the following equation (27) and generates the analysis model for input variables MQ.

[Formula 15] Equation (27)

$$[y] = \frac{\sum_{j=1}^{K} [p_r^j] * f(x_j; \theta_j)}{\sum_{j=1}^{K} [p_r^j]} \ ... (27)$$

[y] on the left side indicates a column vector configured of inference values for each input data Q1, Q2, ... which becomes a row vector of the input variable Q, that is, the inference result A.

$p_r^j$ on the left side indicates a j-th element (the degree of similarity with a j-th client terminal Cj) of a similarity

vector $p_r$ calculated for input variable Qr. $\theta_j$ is a model parameter of the individual analysis model M3j.

<Federated Learning Sequence>

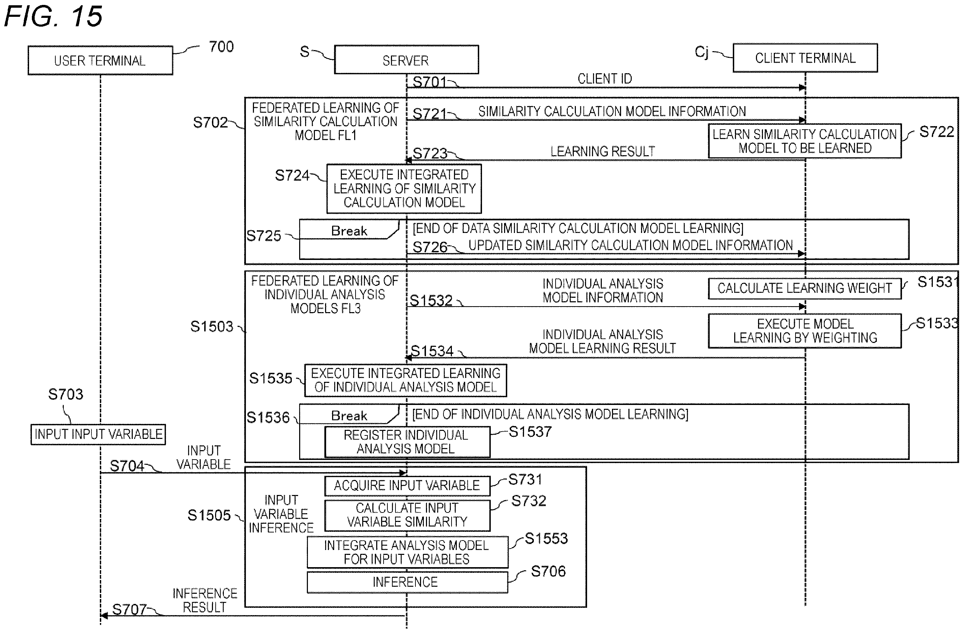

FIG. 15 is a sequence diagram of federated learning in the federated learning system 100 according to Example 2. First, transmission of the client ID 201 from the server S to each client terminal Cj (step S701) and execution of the federated learning FL1 of the similarity calculation model (step S702) are the same as in Example 1.

Next, the federated learning system 100 executes federated learning FL3 of the individual analysis model (step S1503).

In the federated learning FL3 of the individual analysis model (step S1503), the client terminal Cj executes the learning weight calculation 90j (901 to 903) using the integrated similarity calculation model M1, and calculates the learning weight w9j (w91 to w93) (step S1531).

The server S transmits the individual analysis model information (the individual analysis model M3j(t+1) or integrated model parameter $\theta_j^{t+1}$ thereof) to the client terminal Cj (step S1532).

The client terminal Cj executes the model learning by weighting 91jt (step S1533), and transmits the individual analysis model learning result 92j-kt to the server S (step S1534).

The server S uses the individual analysis model learning result 92j-kt to execute the integrated learning 930t of the individual analysis model (step S1535).

The server S determines whether the end condition for the integrated learning 930t of the individual analysis model (step S1535) is satisfied (step S1536).

When the end condition is not satisfied, the server S registers the updated individual analysis model information (step S1537) and transmits the updated individual analysis model information to the client terminal Cj. When the end condition is satisfied, the server S transmits the updated individual analysis model information to the client terminal Cj. Accordingly, the client terminal Cj generates the individual analysis model M3j using the updated individual analysis model information, and ends the federated learning FL3 of the individual analysis model (step S1503).

The user terminal 700 that can communicate with the server S receives the input of the input variable Qr (step S703), and transmits the input variable Qr to the server S (step S704).

After that, the server S executes input variable inference (step S1505). In the input variable inference (step S1505), the server S acquires the input variable Q (step S731). Next, the server S executes the input variable similarity calculation 404 using the integrated similarity calculation model M1, and outputs the input variable similarity QS (step S732).

The server S executes the analysis model for input variables integration 800, which integrates the individual analysis models M31 to M33 registered in step S1537, using the input variable similarity QS, and generates the analysis model for input variables MQ (step S1553).

After that, the server S executes the inference IN by inputting the input variable Q into the analysis model for input variables MQ (step S706). Then, the server transmits the inference result A to the user terminal 700 (step S707).

As such, according to Example 2, the analysis model for input variables MQ considering the value of input variable Q can be generated as an integrated model obtained by integrating the individual analysis models M31 to M33 of the client terminals C1 to C3.

According to Example 2, it is possible to provide an individual analysis model M2k suitable for each client terminal Ck participating in the federated learning. When generating the integrated similarity calculation model M1, since the client terminal Ck can also predict the similarity with another learning data set Dk without passing the data sample i to another client terminal Ck or the server S, leakage of the data sample i itself can be prevented.

[Example 3]

Next, Example 3 will be described. In Example 2, the federated learning FL3 of the individual analysis model is executed, but in Example 3, the federated learning FL3 of the individual analysis model is not executed by the federated learning system 100, and the client terminal Cj holds the individual analysis model M3j. The individual analysis model M3j may be a prediction model given from the outside, or may be a prediction model created by the user of the client terminal Cj.

In Example 3, as in Example 2, the server S executes the input variable similarity calculation 404 and the analysis model for input variables integration 800 to generate the analysis model for input variables MQ. As in Example 2, the inference IN is executed and the inference result A is obtained.

As such, according to Example 3, the calculation load can be reduced.

<Display Screen Example>

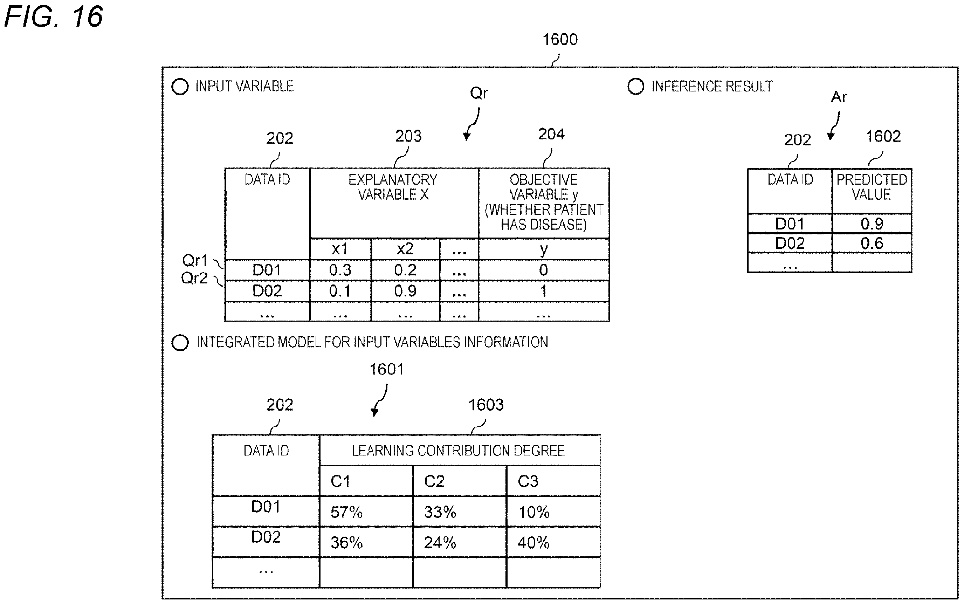

FIG. 16 is an explanatory diagram of an example of a management screen according to Examples 1 to 3. A management screen 1600 is displayed on the server S. The management screen 1600 displays the input variable Q, the inference result A, and integrated model information for input variables 1601. The inference result A includes a predicted value 1602 for each data ID 202 included in the input variable Q. The integrated model information for input variables 1601 includes a learning contribution degree 1603 for each data ID 202 included in the input variable Q.

The integrated model information for input variables 1601 includes the learning contribution degree 1603 of the client terminal Cj for each data ID 202 included in the input variable Q. The learning contribution degree 1603 is calculated by the following equation. The learning contribution degree 1603 is an index value indicating how much the learning data set Dk of the client terminal Ck contributes to the learning of the individual analysis model.

[Formula 16] Equation (28)

$$R_j^{\,r} = \frac{W_j^{\,r}}{W^{\,r}} \ \dots (28)$$

$R_j^k$ on the left side of the above equation (28) is the learning contribution degree 1603 of the client terminal Cj. The denominator of the right side is $W^r$ shown in the above equation (15), and the numerator of the right side is $W_j^r$ shown in the above equation (14). The learning contribution degree 1603 of the client terminal Cj is calculated by the server S.

As such, it is possible to confirm how much each of the data samples i of the client terminal Cj contributed to the inference result A, based on the learning contribution degree 1603 for each client terminal Cj. For example, for input data Q1 (data ID 202 is "D01") in the input variable Q, the learning contribution degree 1603 of the client terminal C1 is 57%, the learning contribution degree 1603 of the client terminal C2 is 33%, and the learning contribution degree 1603 of the client terminal C3 is 10%. Accordingly, it can be seen that the client terminal Cj that contributed to the predicted value 1602 of "0.9" for the input data Q1 (data ID 202 is "D01") is the client terminal C1 with the highest learning contribution degree 1603. Therefore, it can be seen that the input data Q1 is more similar to the data sample i of the learning data set D1 of the client terminal C1 than to the data sample i of the learning data set D2 of the client terminal C2 or the learning data set D3 of the client terminal C3.

<Hardware Configuration Example of Server S and Client Terminal Ck>

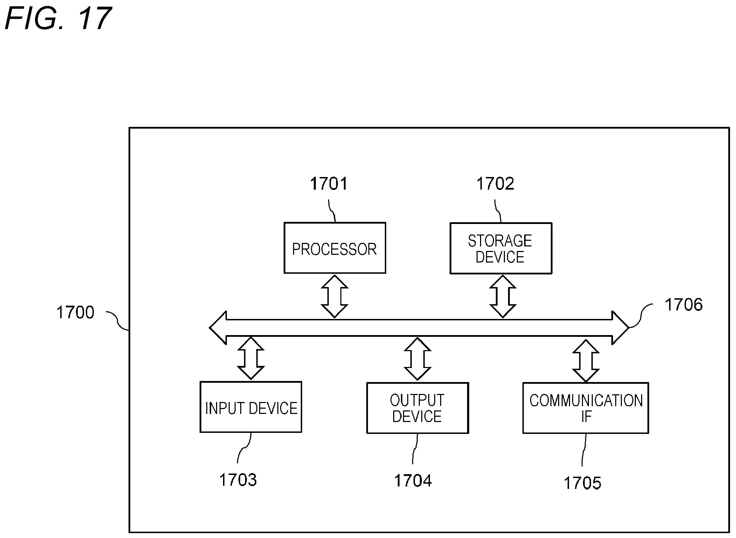

FIG. 17 is a block diagram illustrating a hardware configuration example of the server S and the client terminal Ck (hereinafter referred to as computer 1700) according to Examples 1 to 3. The computer 1700 includes a processor 1701, a storage device 1702, an input device 1703, an output device 1704, and a communication interface (communication IF) 1705. The processor 1701, the storage device 1702, the input device 1703, the output device 1704, and the communication IF 1705 are connected by a bus 1706. The processor 1701 controls the computer 1700. The storage device 1702 serves as a work area for the processor 1701. The storage device 1702 is a non-temporary or temporary recording medium that stores various programs and data. Examples of the storage device 1702 include a read only memory (ROM), a random access memory (RAM), a hard disk drive (HDD), and a flash memory. The input device 1703 inputs data. Examples of the input device 1703 include a keyboard, a mouse, a touch panel, a numeric keypad, a scanner, a microphone, and a sensor. The output device 1704 outputs data. Examples of the output device 1704 include a display, a printer, and a speaker. The communication IF 1705 connects to a network and transmits and receives data.

The federated learning system 100 described above can also be configured as shown in [1] to [10] below.

[1] The federated learning system 100 includes a plurality of client terminals C1 to C3 that respectively have learning data sets D1 to D3, and a server S capable of communicating with the plurality of client terminals C1 to C3, and performs federated learning, in which each of the plurality of client terminals C1 to C3 learns a model using each of the learning data sets D1 to D3 and the server S repeats a process of integrating the model of each of the plurality of client terminals C1 to C3 using the learning result.

The learning data set Dk includes one or more data samples i including the client ID 201 specifying the client terminal Ck, a first explanatory variable 203, and a first objective variable 204.

The federated learning system 100 executes a first calculation process (input variable similarity calculation) by the server S and a second calculation process (learning weight calculations 401 to 403) by each of the plurality of client terminals C1 to C3 and executes a first federated learning process (FL2) that repeats a first learning process (model learning by weighting 411t to 413t) by each of the plurality of client terminals C1 to C3 and a first integration process (integrated learning 330t) by the server S until a first end condition is satisfied.

In the first calculation process (input variable similarity calculation), the server S obtains an input data set (input variable Q) including one or more pieces of input data (Q1, Q2) that includes the client ID 201 specifying the client terminal Ck, the first explanatory variable 203, and the first objective variable 204.

In the first calculation process (input variable similarity calculation), the server S calculates a first similarity (prediction probability [pq]) between the input data set and the plurality of learning data sets D1 to D3 by inputting the input data set (input variable Q) into a similarity calculation model M1 for calculating a similarity between the data sample i and the plurality of learning data sets D1 to D3.

In the second calculation process (learning weight calculations 401 to 403), each of the plurality of client terminals C1 to C3 calculates a second similarity (prediction probability $[p_j]$) between the data sample i and the plurality of learning data sets D1 to D3 by inputting the data sample i into the similarity calculation model M1.

In the second calculation process (learning weight calculations 401 to 403), each of the plurality of client terminals C1 to C3 outputs a learning weight wj by performing a similarity calculation between the first similarity (prediction probability [pq]) and the second similarity (prediction probability $[p_j]$).

In the first learning process (model learning by weighting 411t to 413t), each of the plurality of client terminals C1 to C3 learns a first analysis model (analysis model for input variables to be learned M21-1t, M22-1t, M23-1t) that calculates a predicted value of the first objective variable 204 from the first explanatory variable 203 for the input data set based on the first analysis model (analysis model for input variables to be learned M21-1t, M22-1t, M23-1t), the first explanatory variable 203 and the first objective variable 204 of the learning data set, and the learning weight, and transmits a first learning result (421-t, 422-t, and 423-t) to the server S.

In the first integration process (integrated learning 330t), the server S generates a second analysis model (analysis model for input variables MQ) that calculates a predicted value of the first objective variable 204 from the first explanatory variable 203 for the input data set by integrating the first learning result (421-t, 422-t, and 423-t) by the first learning process (model learning by weighting 411t to 413t) from the plurality of client terminals C1 to C3.

[2] In the federated learning system 100 of [1] described above, each of the plurality of client terminals C1 to C3 executes the first learning process (model learning by weighting 411t to 413t) using the second analysis model generated by the first integration process (integrated learning 330t) as the first analysis model.

[3] In the federated learning system 100 of [1] described above, the server executes inference IN by inputting the input data set (input variable Q) into the second analysis model (analysis model for input variables MQ) when the first end condition is satisfied.

[4] The federated learning system 100 includes a plurality of client terminals C1 to C3 that respectively have learning data sets D1 to D3, and a server S capable of communicating with the plurality of client terminals C1 to C3, and performs federated learning, in which each of the plurality of client terminals C1 to C3 learns a model using each of the learning data sets D1 to D3 and the server S repeats a process of integrating the model of each of the plurality of client terminals C1 to C3 using the learning result.

The learning data set Dk includes one or more data samples i including a client ID 201 specifying the client terminal Ck, a first explanatory variable 203, and a first objective variable 204.

The federated learning system 100 executes a first calculation process (input variable similarity calculation) by the server S and a second calculation process (learning weight calculations 901 to 903) by each of the plurality of client terminals C1 to C3 and executes a first federated learning process (FL2) that repeats a first learning process (model learning by weighting 911t to 913t) by each of the plurality of client terminals C1 to C3 and a first integration process (integrated learning 930t) by the server S until a first end condition is satisfied.

In the first calculation process (input variable similarity calculation), the server S obtains an input data set (input variable Q) including one or more pieces of input data (Q1, Q2) that includes the client ID specifying the client terminal Ck, the first explanatory variable 203, and the first objective variable 204.

In the first calculation process (input variable similarity calculation), the server S calculates a first similarity (prediction probability [pq]) between the input data set and the plurality of learning data sets D1 to D3 by inputting the input data set (input variable Q) into a similarity calculation model M1 for calculating a similarity between the data sample i and the plurality of learning data sets D1 to D3.

In the second calculation process (learning weight calculations 901 to 903), each of the plurality of client terminals C1 to C3 calculates a second similarity (prediction probability $[p_{ji}{}^k]^t$) between the data sample i and the plurality of learning data sets D1 to D3 by inputting the data sample i into the similarity calculation model M1 for calculating the similarity between the data sample i and the plurality of learning data sets D1 to D3.

In the first learning process (model learning by weighting 911t to 913t), each of the plurality of client terminals C1 to C3 learns an individual analysis model (individual analysis models to be learned M31-1t, M32-1t, and M33-1t) for calculating a predicted value of the first objective variable 204 from the first explanatory variable 203 based on the individual analysis model (individual analysis models to be learned M31-1t, M32-1t, and M33-1t), the first explanatory variable 203, the first objective variable 204, and a specific second similarity (prediction probability $[p_{ji}{}^1]^t$) with a specific learning data set (for example, D1) calculated by each of the plurality of client terminals C1 to C3 by the calculation process.

In the first integration process (integrated learning 930t), the server S generates an analysis model (analysis model for input variables MQ) for calculating the predicted value of the first objective variable 204 from the first explanatory variable 203 for the input data set by integrating a plurality of first learning results (921-1t, 922-1t, and 923-1t) by the first learning process (model learning by weighting 911t to 913t) from the plurality of client terminals C1 to C3, using the first similarity (prediction probability [pq]).

[5] In the federated learning system 100 of [4] described above, each of the plurality of client terminals C1 to C3 executes the first learning process (model learning by weighting 911t to 913t) using the analysis model generated by the first integration process (integrated learning 930t) as the individual analysis model.

[6] In the federated learning system 100 of [4] described above, the server S executes inference IN by inputting the input data set (input variable Q) into the analysis model (analysis model for input variables MQ) when the first end condition is satisfied.

[7] In the federated learning system 100 of [1] described above, in the second calculation process (learning weight calculations 401 to 403), each of the plurality of client terminals C1 to C3 calculates the second similarity (prediction probability $[p_j]$) by inputting a combination of the first explanatory variable 203 and the first objective variable 204 of the data sample i into the similarity calculation model M1 as a second explanatory variable 301.

[8] In the federated learning system 100 of [4] described above, in the second calculation process (learning weight calculations 901 to 903), each of the plurality of client terminals C1 to C3 calculates a learning weight ($w_1^1$, $w_2^1$, and $w_3^1$) according to the specific second similarity (prediction probability $[p_{ji}^1]^t$).

In the first learning process (model learning by weighting 911t to 913t), each of the plurality of client terminals C1 to C3 learns the individual analysis model (individual analysis models to be learned M31-1t, M32-1t, and M33-1t) based on the individual analysis model (individual analysis models to be learned M31-1t, M32-1t, and M33-1t), the first explanatory variable 203, the first objective variable 204, and a learning weight ($w_1^1$, $w_2^1$, and $w_3^1$) corresponding to the specific second similarity (prediction probability $[p_{ji}^1]^t$) calculated by each of the plurality of client terminals C1 to C3 by the second calculation process (learning weight calculations 901 to 903).

[9] The federated learning system 100 of [1] described above executes, before the first federated learning process (FL2), a second federated learning process (FL1) in which a second learning process (model learning 311t to 313t) by each of the plurality of client terminals C1 to C3 and a second integration process (integrated learning 330t) by the server S are repeated until a second end condition is satisfied.

In the second learning process (model learning 311t to 313t), each of the plurality of client terminals C1 to C3 learns similarity calculation models to be learned M11t to M13t using a combination of the first explanatory variable 203 and the first objective variable 204 as a second explanatory variable 301 and the client ID 201 as a second objective variable 302.

In the second integration process (integrated learning 330t), the server S integrates second learning results 321t to 323t of the similarity calculation models to be learned M11t to M13t from the plurality of client terminals C1 to C3 by the second learning process (model learning 311t to 313t) and generates an integrated similarity calculation model M1(t+1) obtained by integrating the similarity calculation models to be learned M11t to M13t of the plurality of client terminals C1 to C3 as the similarity calculation model M1.

[10] In the federated learning system 100 of [9] described above, in the second learning process (model learning 311t to 313t), each of the plurality of client terminals C1 to C3 sets the updated similarity calculation models to be learned M11t to M13t as the similarity calculation model M1 when the second end condition is satisfied.

The invention is not limited to the examples described above, but includes various modifications and equivalent configurations within the scope of the appended claims. For example, the examples described above have been described in detail to describe the invention in an easy-to-understand manner, and the invention is not necessarily limited to those having all the configurations described. A part of a configuration of a certain example may be replaced with a configuration of another example. The configuration of another example may be added to the configuration of a certain example. Other configurations may be added to, deleted from, or replaced with a part of the configuration of each example.

Each configuration, function, processing unit, processing means, and the like described above may be implemented by hardware, for example, by designing a part or all thereof with an integrated circuit, or may be implemented by software by a processor interpreting and executing a program for implementing each function.

Information such as a program, a table, and a file that implement each function can be stored in a storage device such as a memory, a hard disk, and a solid state drive (SSD), or a recording medium such as an integrated circuit (IC) card, an SD card, and a digital versatile disc (DVD).

Control lines and information lines shown are those considered necessary for description, and do not necessarily show all the control lines and information lines necessary for implementation. In reality, almost all configurations may be considered interconnected.

**Claims**

1. A federated learning system comprising a plurality of client terminals that respectively have learning data sets, and a server capable of communicating with the plurality of client terminals, the federated learning system performing federated learning, in which each of the plurality of client terminals learns a model using each of the learning data sets and the server repeats a process of integrating the model of each of the plurality of client terminals using the learning result, wherein

the learning data set includes one or more data samples including a client ID specifying the client terminal, a first explanatory variable, and a first objective variable,

the federated learning system executes a first calculation process by the server and a second calculation process by each of the plurality of client terminals, and executes a first federated learning process that repeats a first learning process by each of the plurality of client terminals and a first integration process by the server until a first end condition is satisfied,

in the first calculation process, the server

obtains an input data set including one or more pieces of input data that includes the client ID specifying the client terminal, the first explanatory variable, and the first objective variable, and

calculates a first similarity between the input data set and the plurality of learning data sets by inputting the input data set into a similarity calculation model for calculating a similarity between the data sample and the plurality of learning data sets,

in the second calculation process, each of the plurality of client terminals

calculates a second similarity between the data sample and the plurality of learning data sets by inputting the data sample into the similarity calculation model, and

outputs a learning weight by performing a similarity calculation between the first similarity and the second similarity,

in the first learning process, each of the plurality of client terminals

learns a first analysis model that calculates a predicted value of the first objective variable from the first explanatory variable for the input data set based on the first analysis model, the first explanatory variable and the first objective variable of the learning data set, and the learning weight, and transmits a first learning result to the server, and

in the first integration process, the server

generates a second analysis model that calculates a predicted value of the first objective variable from the first explanatory variable for the input data set by integrating the first learning result by the first learning process from the plurality of client terminals.

2. The federated learning system according to claim 1, wherein
each of the plurality of client terminals executes the first learning process using the second analysis model generated by the first integration process as the first analysis model.

3. The federated learning system according to claim 1 or 2, wherein
the server executes inference by inputting the input data set into the second analysis model when the first end condition is satisfied.

4. A federated learning system comprising a plurality of client terminals that respectively have learning data sets, and a server capable of communicating with the plurality of client terminals, the federated learning system performing federated learning, in which each of the plurality of client terminals learns a model using each of the learning data sets and the server repeats a process of integrating the model of each of the plurality of client terminals using the learning result, wherein

the learning data set includes one or more data samples including a client ID specifying the client terminal, a first explanatory variable, and a first objective variable,

the federated learning system executes a first calculation process by the server and a second calculation process by each of the plurality of client terminals, and executes a first federated learning process that repeats a first learning process by each of the plurality of client terminals and a first integration process by the server until a first end condition is satisfied,

in the first calculation process, the server

obtains an input data set including one or more pieces of input data that includes the client ID specifying the client terminal, the first explanatory variable, and the first objective variable, and

calculates a first similarity between the input data set and the plurality of learning data sets by inputting the input data set into a similarity calculation model for calculating a similarity between the data sample and the plurality of learning data sets,

in the second calculation process, each of the plurality of client terminals

calculates a second similarity between the data sample and the plurality of learning data sets by inputting the data sample into the similarity calculation model for calculating the similarity between the data sample and the plurality of learning data sets,

in the first learning process, each of the plurality of client terminals

learns an individual analysis model for calculating a predicted value of the first objective variable from the first explanatory variable based on the individual analysis model, the first explanatory variable, the first objective variable, and a specific second similarity with a specific learning data set calculated by each of the plurality of client terminals by the calculation process, and

in the first integration process, the server

generates an analysis model for calculating the predicted value of the first objective variable from the first explanatory variable for the input data set by integrating a plurality of first learning results by the first learning process from the plurality of client terminals, using the first similarity.

5. The federated learning system according to claim 4, wherein
each of the plurality of client terminals executes the first learning process using the analysis model generated by the first integration process as the individual analysis model.

6. The federated learning system according to claim 4 or 5, wherein
the server executes inference by inputting the input data set into the analysis model when the first end condition is satisfied.

7. The federated learning system according to claim 1, wherein

in the second calculation process, each of the plurality of client terminals
calculates the second similarity by inputting a combination of the first explanatory variable and the first objective variable of the data sample into the similarity calculation model as a second explanatory variable.

8. The federated learning system according to claim 4, wherein

in the second calculation process, each of the plurality of client terminals
calculates a learning weight according to the specific second similarity, and
in the first learning process, each of the plurality of client terminals
learns the individual analysis model based on the individual analysis model, the first explanatory variable, the first objective variable, and a learning weight corresponding to the specific second similarity calculated by each of the plurality of client terminals by the second calculation process.

9. The federated learning system according to claim 1, wherein

the federated learning system executes, before the first federated learning process, a second federated learning process in which a second learning process by each of the plurality of client terminals and a second integration process by the server are repeated until a second end condition is satisfied,
in the second learning process, each of the plurality of client terminals
learns a similarity calculation model to be learned using a combination of the first explanatory variable and the first objective variable as a second explanatory variable and the client ID as a second objective variable, and
in the second integration process, the server
integrates second learning results of the similarity calculation models to be learned from the plurality of client terminals by the second learning process and generates an integrated similarity calculation model obtained by integrating the similarity calculation models to be learned of the plurality of client terminals as the similarity calculation model.

10. The federated learning system according to claim 9, wherein
in the second learning process, each of the plurality of client terminals sets the updated similarity calculation models to be learned as the similarity calculation model when the second end condition is satisfied.

**11.** A federated learning method in which a federated learning system includes a plurality of client terminals that respectively have learning data sets, and a server capable of communicating with the plurality of client terminals, and performs federated learning, in which each of the plurality of client terminals learns a model using each of the learning data sets and the server repeats a process of integrating the model of each of the plurality of client terminals using the learning result, wherein

the learning data set includes one or more data samples including a client ID specifying the client terminal, a first explanatory variable, and a first objective variable,

the federated learning system

executes a first calculation process by the server and a second calculation process by each of the plurality of client terminals, and executes a first federated learning process that repeats a first learning process by each of the plurality of client terminals and a first integration process by the server until a first end condition is satisfied,

in the first calculation process, the server

obtains an input data set including one or more pieces of input data that includes the client ID specifying the client terminal, the first explanatory variable, and the first objective variable, and

calculates a first similarity between the input data set and the plurality of learning data sets by inputting the input data set into a similarity calculation model for calculating a similarity between the data sample and the plurality of learning data sets,

in the second calculation process, each of the plurality of client terminals

calculates a second similarity between the data sample and the plurality of learning data sets by inputting the data sample into the similarity calculation model, and

outputs a learning weight by performing a similarity calculation between the first similarity and the second similarity,

in the first learning process, each of the plurality of client terminals

learns a first analysis model that calculates a predicted value of the first objective variable from the first explanatory variable for the input data set based on the first analysis model, the first explanatory variable and the first objective variable of the learning data set, and the learning weight, and transmits a first learning result to the server, and

in the first integration process, the server

generates a second analysis model that calculates a predicted value of the first objective variable from the first explanatory variable for the input data set by integrating the first learning result by the first learning process from the plurality of client terminals.

# FIG. 1

EP 4 407 524 A1

## FIG. 2

| CLIENT ID (201) | DATA ID (202) | EXPLANATORY VARIABLE X (203) | | | OBJECTIVE VARIABLE y (WHETHER PATIENT HAS DISEASE) (204) |
|---|---|---|---|---|---|
| | | x1 | x2 | ... | |
| C1 | D11 | 0.3 | 0.2 | ... | 1 |
| C1 | D12 | 0.1 | 0.9 | ... | 0 |
| C1 | D13 | 0.4 | -0.3 | ... | ... |
| ... | ... | ... | ... | ... | ... |
| C1 | ... | ... | ... | ... | ... |

D1

| CLIENT ID (201) | DATA ID (202) | EXPLANATORY VARIABLE X (203) | | | OBJECTIVE VARIABLE y (WHETHER PATIENT HAS DISEASE) (204) |
|---|---|---|---|---|---|
| | | x1 | x2 | ... | |
| C2 | D21 | 0.7 | 0.6 | ... | 1 |
| C2 | D22 | 0.4 | 0.5 | ... | 1 |
| C2 | D23 | 0.1 | 0.9 | ... | ... |
| ... | ... | ... | ... | ... | ... |
| C2 | ... | ... | ... | ... | ... |

D2

| CLIENT ID (201) | DATA ID (202) | EXPLANATORY VARIABLE X (203) | | | OBJECTIVE VARIABLE y (WHETHER PATIENT HAS DISEASE) (204) |
|---|---|---|---|---|---|
| | | x1 | x2 | ... | |
| C3 | D31 | 0.2 | 0.5 | ... | 0 |
| C3 | D32 | 0.8 | 0.1 | ... | 0 |
| C3 | D33 | 0.7 | 0.3 | ... | ... |
| ... | ... | ... | ... | ... | ... |
| C3 | ... | ... | ... | ... | ... |

D3

FIG. 3

OBJECTIVE VARIABLE 302 | EXPLANATORY VARIABLE 301

FEDERATED LEARNING OF SIMILARITY CALCULATION MODEL FL1

C1

| CID | x1 | x2 | ... | y |
|-----|-----|-----|-----|---|
| C1 | 0.3 | 0.2 | ... | 1 |
| C1 | 0.1 | 0.9 | ... | 0 |
| ... | ... | ... | ... | ... |

D11
D12

D1

M11t → SIMILARITY CALCULATION MODEL TO BE LEARNED → MODEL LEARNING (311t) → LEARNING RESULT (321t)

C2

| CID | x1 | x2 | ... | y |
|-----|-----|-----|-----|---|
| C2 | 0.7 | 0.6 | ... | 1 |
| C2 | 0.4 | 0.5 | ... | 1 |
| ... | ... | ... | ... | ... |

D21
D22

D2

M12t → SIMILARITY CALCULATION MODEL TO BE LEARNED → MODEL LEARNING (312t) → LEARNING RESULT (322t)

C3

| CID | x1 | x2 | ... | y |
|-----|-----|-----|-----|---|
| C3 | 0.2 | 0.5 | ... | 0 |
| C3 | 0.8 | 0.1 | ... | 0 |
| ... | ... | ... | ... | ... |

D31
D32

D3

M13t → SIMILARITY CALCULATION MODEL TO BE LEARNED → MODEL LEARNING (313t) → LEARNING RESULT (323t)

100

S

BASE SIMILARITY CALCULATION MODEL — M10

$M1(t+1)$ — INTEGRATED SIMILARITY CALCULATION MODEL

330t — INTEGRATED LEARNING

M1 — INTEGRATED SIMILARITY CALCULATION MODEL

EP 4 407 524 A1

# FIG. 4

FEDERATED LEARNING OF ANALYSIS MODEL FOR INPUT VARIABLES FL2

FIG. 5

# FIG. 6

EP 4 407 524 A1

## FIG. 7

USER TERMINAL — 700    S — SERVER    Cj — CLIENT TERMINAL

S701 — CLIENT ID

S702 — FEDERATED LEARNING OF SIMILARITY CALCULATION MODEL FL1

S721 — SIMILARITY CALCULATION MODEL INFORMATION

S722 — LEARN SIMILARITY CALCULATION MODEL TO BE LEARNED

S723 — LEARNING RESULT

S724 — EXECUTE INTEGRATED LEARNING OF SIMILARITY CALCULATION MODEL

S703 — INPUT INPUT VARIABLE

S725 — Break — [END OF DATA SIMILARITY CALCULATION MODEL LEARNING]

S726 — UPDATED SIMILARITY CALCULATION MODEL INFORMATION

S704 — INPUT VARIABLE

S731 — ACQUIRE INPUT VARIABLE

S732 — CALCULATE INPUT VARIABLE SIMILARITY

S733 — INPUT VARIABLE SIMILARITY

S734 — CALCULATE LEARNING WEIGHT

S705 — FEDERATED LEARNING OF ANALYSIS MODEL FOR INPUT VARIABLES FL2

S735 — ANALYSIS MODEL FOR INPUT VARIABLES INFORMATION

S736 — EXECUTE MODEL LEARNING BY WEIGHTING

S737 — LEARNING RESULT OF ANALYSIS MODEL FOR INPUT VARIABLES

S738 — INTEGRATED LEARNING

S739 — Break — [END OF ANALYSIS MODEL FOR INPUT VARIABLES LEARNING]

S740 — REGISTER ANALYSIS MODEL FOR INPUT VARIABLES

S706 — INFERENCE

S707 — INFERENCE RESULT

*FIG. 8*

## FIG. 9

FEDERATED LEARNING OF INDIVIDUAL ANALYSIS MODELS FL3

*FIG. 10*

*FIG. 11*

FIG. 12

EP 4 407 524 A1

FIG. 13

EP 4 407 524 A1

# FIG. 14

| | 203 | | 204 |
|---|---|---|---|
| x1 | x2 | ... | y |
| 0.3 | 0.2 | ... | 0 |
| 0.1 | 0.9 | ... | 1 |
| ... | ... | ... | ... |

S
Q1
Q2
Q

M1

INTEGRATED SIMILARITY CALCULATION MODEL

[pq]

INPUT VARIABLE SIMILARITY CALCULATION — 404

PREDICTION PROBABILITY (INPUT VARIABLE SIMILARITY)

| CID=1 | CID=2 | CID=3 |
|---|---|---|
| 0.8 | 0.1 | 0.1 |
| 0.7 | 0.2 | 0.1 |
| ... | ... | ... |

$[pq_1]$
$[pq_2]$

QS →

800 — ANALYSIS MODEL FOR INPUT VARIABLES INTEGRATION

MQ

ANALYSIS MODEL FOR INPUT VARIABLES

INDIVIDUAL ANALYSIS MODEL — M31

INDIVIDUAL ANALYSIS MODEL — M32

INDIVIDUAL ANALYSIS MODEL — M33

EP 4 407 524 A1

# FIG. 15

EP 4 407 524 A1

# FIG. 16

**1600**

○ INPUT VARIABLE  Qr

| 202 | 203 | | | 204 |
|-----|-----|---|---|-----|
| DATA ID | EXPLANATORY VARIABLE X | | | OBJECTIVE VARIABLE y (WHETHER PATIENT HAS DISEASE) |
| | x1 | x2 | ... | y |
| D01 (Qr1) | 0.3 | 0.2 | ... | 0 |
| D02 (Qr2) | 0.1 | 0.9 | ... | 1 |
| ... | ... | ... | ... | ... |

○ INFERENCE RESULT  Ar

| 202 | 1602 |
|-----|------|
| DATA ID | PREDICTED VALUE |
| D01 | 0.9 |
| D02 | 0.6 |
| ... | |

○ INTEGRATED MODEL FOR INPUT VARIABLES INFORMATION

**1601**

| 202 | 1603 | | |
|-----|------|---|---|
| DATA ID | LEARNING CONTRIBUTION DEGREE | | |
| | C1 | C2 | C3 |
| D01 | 57% | 33% | 10% |
| D02 | 36% | 24% | 40% |
| ... | | | |

EP 4 407 524 A1

## FIG. 17

**EUROPEAN SEARCH REPORT**

Application Number

EP 23 20 8074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/272011 A1 (YONETANI RYO [JP]) 2 September 2021 (2021-09-02) * paragraph [0028] – paragraph [0067] * * figures 1-5, 15A * ----- | 1-11 | INV. G06N3/098 |

TECHNICAL FIELDS SEARCHED (IPC)

G06N

The present search report has been drawn up for all claims

| Place of search | Date of completion of the search | Examiner |
|---|---|---|
| The Hague | 22 March 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 8074

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | Publication date | Patent family member(s) | | Publication date |
|---|---|---|---|---|---|
| US 2021272011 | A1 | 02-09-2021 | CN | 115053238 A | 13-09-2022 |
| | | | EP | 4111386 A1 | 04-01-2023 |
| | | | JP | 2023513613 A | 31-03-2023 |
| | | | US | 2021272011 A1 | 02-09-2021 |
| | | | WO | 2021172058 A1 | 02-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023010183 A
- WO 2021079792 A